# EUROPEAN PATENT APPLICATION

(11) **EP 4 794 359 A1**
(43) Date of publication of application: **19.08.2026**
(21) Application number: 24881528.4
(22) Date of filing: 18.10.2024
(51) Int. Cl.: H04W 4/08

(54) **COMMUNICATION METHOD AND APPARATUS**

(30) Priority: 28.10.2023 CN 202311422447
(71) Applicant: HUAWEI TECHNOLOGIES CO., LTD., Shenzhen 518129 (CN)
(72) Inventor: DING, Hui, Shenzhen, Guangdong 518129 (CN)
(74) Representative: Grünecker Patent- und Rechtsanwälte PartG mbB
(86) International application number: PCT/CN2024/125852
(87) International publication number: WO 2025/087163

(57) **Abstract**

This application relates to the field of wireless communication, and provides a communication method and apparatus, so that a mapping relationship between a group and a group member in the group can be dynamically maintained, thereby simplifying a procedure of joining the group by a terminal, and helping the terminal flexibly join the group. The method includes: A first network element in a core network receives a request for allowing a terminal to access the core network, and when it is determined that the terminal is allowed to join a first group, stores an association relationship between an identifier of the first group and an identifier of the terminal, where the request for allowing the terminal to access the core network includes the identifier of the first group.

## Description

This application claims priority to Chinese Patent Application No. 202311422447.3, filed with the China National Intellectual Property Administration on October 28, 2023 and entitled "COMMUNICATION METHOD AND APPARATUS", which is incorporated herein by reference in its entirety.

### TECHNICAL FIELD

This application relates to the field of wireless communication, and in particular, to a communication method and apparatus.

### BACKGROUND

In a communication system, a terminal may join one or more groups, and a network may determine a policy at a granularity of a group, for example, an offloading policy or a traffic statistics policy, so that terminals in a same group can use a same policy for communication. When a group is created, a mapping relationship between a group and a group member is usually preset in a unified data management (unified data management, UDM) network element, and is maintained by the UDM network element. When a terminal joins the group, an application function (application function, AF) network element needs to trigger, through a network exposure function (network exposure function, NEF) network element, the UDM network element to modify group member subscription data maintained by the UDM network element. This procedure is complex, and is not suitable for an increasingly complex communication scenario.

### SUMMARY

This application provides a communication method and apparatus, so that a mapping relationship between a group and a group member in the group can be dynamically maintained, thereby simplifying a procedure of joining the group by a terminal, and improving efficiency of joining the group by the terminal.

To achieve the foregoing objective, the following technical solutions are used in this application.

According to a first aspect, a communication method is provided. The method may be performed by a first network element in a core network. The first network element herein may refer to the first network element itself, or may refer to a processor, a module, a logical node, a chip, a chip system, or the like that is in the first network element and that implements the method. For example, the first network element is an existing network element in the core network, for example, a UDM network element, a unified data repository (unified data repository, UDR) network element, or a policy control function (policy control function, PCF) network element. Alternatively, the first network element is a newly added network element in the core network, for example, a group data management function (group data management function, GDMF) network element.

The method includes: receiving a first request for requesting to allow a terminal to access the core network; and when it is determined that the terminal is allowed to join a first group, storing an association relationship between an identifier of the first group and an identifier of the terminal. The first request includes the identifier of the first group.

Based on the method provided in the first aspect, the first network element may dynamically maintain the mapping relationship between the first group and a group member of the first group based on the request for allowing the terminal to access the core network, thereby simplifying a procedure of joining the group by the terminal, and helping the terminal flexibly join the first group and access the core network by using the identifier of the first group.

In a possible implementation, that it is determined that the terminal is allowed to join the first group includes: sending an authentication request to a serving node, where the authentication request is for requesting to verify whether the terminal is allowed to join the first group, and the serving node is configured to provide a service for a terminal in the first group; and receiving an authentication result from the serving node, where the authentication result indicates that the terminal is allowed to join the first group.

Based on the foregoing possible implementation, the first network element may request the serving node to verify the terminal, to determine that the terminal is allowed to access the first group.

In a possible implementation, before sending the authentication request to the serving node, the method further includes: receiving a registration request from the serving node, where the registration request includes address information of the serving node; and the sending the authentication request to the serving node includes: sending the authentication request to the serving node based on the address information of the serving node.

Based on the foregoing possible implementation, the first network element may register the information of the serving node, to subsequently address the serving node based on the registered information. For example, when the request for allowing the terminal to access the core network is received, the serving node may be requested to verify the terminal based on the registered information.

In a possible implementation, the registration request further includes authentication indication information, and the authentication indication information indicates to authenticate a terminal that requests to join the first group.

Based on the foregoing possible implementation, the first network element may request, based on an indication of the serving node, the serving node to authenticate the terminal that requests to join the first group.

In a possible implementation, the method further includes: receiving a second request for requesting to remove the terminal from the first group; and deleting the association relationship between the identifier of the first group and the identifier of the terminal. The second request includes the identifier of the terminal and the identifier of the first group.

Based on the foregoing possible implementation, the first network element may delete, based on the second request for requesting to remove the terminal from the first group, the association relationship between the identifier of the first group and the identifier of the terminal, to dynamically maintain the mapping relationship between the first group and the group member of the first group.

In a possible implementation, the method further includes: sending first indication information to a policy function network element, where the first indication information indicates to update a policy for the terminal to access the core network, or indicates that the terminal has been removed from the first group.

Based on the foregoing possible implementation, the first network element may indicate, to the policy function network element, to update the policy for the terminal to access the core network, or indicate that the terminal has been removed from the first group, so that the policy function network element re-determines the policy for the terminal to access the core network.

In a possible implementation, the method further includes: receiving a policy update request from the serving node, where the policy update request is for requesting to update policy information of the first group, the serving node is configured to provide a service for a terminal in the first group, and the policy information of the first group indicates a policy for a terminal in the first group to access the core network; and sending updated policy information of the first group to the policy function network element.

Based on the foregoing possible implementation, the first network element may update the policy information of the first group based on the request of the serving node.

In a possible implementation, the method further includes: receiving a third request from the policy function network element, where the third request is for requesting to obtain the policy information of the first group; and sending the policy information of the first group to the policy function network element.

Based on the foregoing possible implementation, the first network element may send the policy information of the first group to the policy function network element based on the request of the policy function network element.

In a possible implementation, the method further includes: receiving a fourth request, where the fourth request is for requesting to associate the identifier of the terminal with the identifier of the first group.

Based on the foregoing possible implementation, the first network element may associate the identifier of the terminal with the identifier of the first group based on the fourth request.

In a possible implementation, the method further includes: sending a response message of the first request, where the response message indicates that the terminal is allowed to join the first group.

Based on the foregoing possible implementation, the first network element may indicate, to a network element (for example, a third network element) that receives the response message, that the terminal is allowed to join the first group.

In a possible implementation, the response message of the first request includes a temporary identifier of the terminal.

Based on the foregoing possible implementation, the first network element may send the temporary identifier of the terminal by using the response message.

In a possible implementation, before sending the response message of the first request, the method further includes: allocating the temporary identifier to the terminal; or receiving the temporary identifier from the serving node, where the serving node is configured to provide a service for a terminal in the first group.

Based on the foregoing possible implementation, the first network element may allocate the temporary identifier to the terminal or obtain the temporary identifier of the terminal from the serving node, to associate the temporary identifier of the terminal with the identifier of the first group, so that the terminal can access the core network by using the identifier of the first group.

In a possible implementation, the method further includes: sending, to the serving node, the identifier of the first group allocated to the first group, where the serving node is configured to provide a service for a terminal in the first group.

Based on the foregoing possible implementation, the first network element may allocate an identifier to the first group, and send the identifier to the serving node, so that the serving node subsequently sends information at a granularity of a group to the first network element based on the identifier.

According to a second aspect, a communication method is provided. The method may be performed by a second network element in a core network. The second network element herein may refer to the second network element itself, or may refer to a processor, a module, a logical node, a chip, a chip system, or the like that is in the second network element and that implements the method. For example, the second network element is a control plane (control plane, CP) network element, for example, a PCF network element or a GDMF network element. The second network element may also be referred to as a policy function network element.

The method includes: receiving a policy request, where the policy request is for requesting a policy for a terminal to access the core network, and the policy request includes an identifier of a first group; determining policy information of the first group based on the identifier of the first group, where the policy information of the first group indicates a policy for a terminal in the first group to access the core network; and sending first policy information based on the policy information of the first group and information about the terminal, where the first policy information indicates the policy for the terminal to access the core network, and the information about the terminal includes subscription information of the terminal or access information of the terminal.

Based on the method provided in the second aspect, the second network element may determine, with reference to the information about the terminal, for example, the subscription information of the terminal or the access information of the terminal, the policy for the terminal to access the core network. The policy is a policy at a granularity of a group. In other words, the policy is a policy used when the terminal accesses the core network by using the identifier of the first group. Therefore, based on the method in the second aspect, the second network element may determine, for terminals in the first group, a group policy suitable for each terminal. It should be understood that, in the first group, group policies corresponding to different terminals may be the same or different.

In a possible implementation, the policy request further includes an identifier of the terminal, and the method further includes: determining the information about the terminal based on the identifier of the terminal.

Based on the foregoing possible implementation, the second network element may determine the information about the terminal based on the identifier of the terminal included in the policy request, to determine, with reference to the information about the terminal, the policy for the terminal to access the core network.

In a possible implementation, the method further includes: sending a third request, where the third request is for requesting to obtain the policy information of the first group.

Based on the foregoing possible implementation, the second network element may request the policy information of the first group from another network element such as a first network element, to determine, based on the policy information of the first group, the policy for the terminal to access the core network.

In a possible implementation, sending the third request includes: sending the third request when the policy information of the first group is not stored.

Based on the foregoing possible implementation, when the policy information of the first group is not stored, the second network element may request the policy information of the first group from another network element, to avoid unnecessary signaling overheads.

In a possible implementation, the method further includes: sending a fourth request, where the fourth request is for requesting to associate the identifier of the terminal with the identifier of the first group.

Based on the foregoing possible implementation, the second network element may further request another network element, for example, the first network element, to associate the identifier of the terminal with the identifier of the first group, so that the terminal accesses the core network by using the identifier of the first group.

In a possible implementation, the method further includes: receiving first indication information, where the first indication information indicates to update the policy for the terminal to access the core network, or indicates that the terminal has been removed from the first group; and sending second policy information based on the information about the terminal, where the second policy information indicates the policy for the terminal to access the core network.

Based on the foregoing possible implementation, the second network element may redetermine, after the terminal is removed from the first group, the policy for the terminal to access the core network.

According to a third aspect, a communication method is provided. The method may be performed by a terminal. The terminal herein may refer to the terminal itself, or may refer to a processor, a module, a logical node, a chip, a chip system, or the like that is in the terminal and that implements the method.

The method includes: obtaining an identifier of a first group; sending a core network access request to a third network element in a core network, where the core network access request is for requesting to allow the terminal to access the core network, and the core network access request includes the identifier of the first group; and receiving a response message from the third network element, where the response message indicates whether the terminal is allowed to join the first group.

Based on the method provided in the third aspect, after obtaining the identifier of the first group, the terminal may send the core network access request to the third network element, to request to access the core network by using the identifier of the first group.

In a possible implementation, the method further includes: sending a second request to the third network element, where the second request is for requesting to remove the terminal from the first group, and the second request includes an identifier of the terminal and the identifier of the first group.

Based on the foregoing possible implementation, the terminal may send the second request to the third network element, to request to leave the first group.

In a possible implementation, the response message includes a temporary identifier of the terminal.

Based on the foregoing possible implementation, the terminal may receive, by using the response message, the temporary identifier allocated by the core network to the terminal, to communicate with a network element in the core network by using the temporary identifier. In this way, when the terminal is not registered with an operator network, the terminal may alternatively access the core network by using the identifier of the first group.

In a possible implementation, obtaining the identifier of the first group includes: receiving first information from the serving node, where the first information is for determining the identifier of the first group, and the serving node is configured to provide a service for a terminal in the first group.

Based on the foregoing possible implementation, the terminal may obtain the identifier of the first group from the serving node, to request the third network element to access the core network by using the identifier of the first group.

According to a fourth aspect, a communication method is provided. The method may be performed by a third network element in a core network. The third network element herein may refer to the third network element itself, or may refer to a processor, a module, a logical node, a chip, a chip system, or the like that is in the third network element and that implements the method. For example, the third network element is a CP network element, for example, an access and mobility management function (access and mobility management function, AMF) network element or a session management function (session management function, SMF) network element.

The method includes: sending a policy request when it is determined that a core network allows a terminal to join a first group, where the policy request is for requesting a policy for the terminal to access the core network, and the policy request includes an identifier of the first group; receiving first policy information, where the first policy information is determined based on policy information of the first group and information about the terminal, the policy information of the first group indicates a policy for a terminal in the first group to access the core network, and the information about the terminal includes subscription information of the terminal or access information about the terminal; and executing the first policy information.

Based on the method provided in the fourth aspect, when it is determined that the core network allows the terminal to join the first group, the third network element may request, from a network element that receives the policy request, for example, a second network element, to determine the policy for the terminal to access the core network, so that the terminal accesses the core network by using the policy.

In a possible implementation, the method further includes: receiving a core network access request from the terminal, where the core network access request is for requesting to allow the terminal to access the core network, and the core network access request includes the identifier of the first group; and sending a first request to a first network element in the core network based on the core network access request, where the first request is for requesting to allow the terminal to access the core network, and the first request includes the identifier of the first group.

Based on the foregoing possible implementation, the third network element may send the first request to the first network element based on the request of the terminal, to request to allow the terminal to access the core network.

In a possible implementation, the method further includes: receiving a response message of the first request from the first network element, where the response message of the first request indicates that the terminal is allowed to join the first group.

Based on the foregoing possible implementation, the third network element may receive the response message, to determine that the core network allows the terminal to join the first group.

In a possible implementation, the response message of the first request includes a temporary identifier of the terminal.

Based on the foregoing possible implementation, the third network element may receive the temporary identifier of the terminal by using the response message, so that the third network element sends the temporary identifier of the terminal to the terminal. In this way, the terminal can communicate with the core network based on the temporary identifier, or associate the temporary identifier of the terminal with the identifier of the first group, thereby helping the third network element subsequently query a group to which the terminal belongs.

According to a fifth aspect, a communication method is provided. The method may be performed by a serving node, and the serving node may provide a service for a terminal in a first group. The serving node herein may be the serving node itself, or may be a processor, a module, a logical node, a chip, a chip system, or the like that is in the serving node and that implements the method.

The method includes: receiving an authentication request from a first network element in a core network, where the authentication request is for requesting to verify whether the terminal is allowed to join the first group, and the authentication request includes an identifier of the first group and an identifier of the terminal; authenticating the terminal based on the authentication request; and sending an authentication result, where the authentication result indicates whether the terminal is allowed to join the first group.

Based on the method provided in the fifth aspect, the serving node may authenticate the terminal based on the request of the first network element, to determine whether the terminal is allowed to join the first group.

In a possible implementation, the method further includes: sending a registration request to the first network element, where the registration request includes address information of the serving node.

Based on the foregoing possible implementation, the serving node may register information about the serving node with the first network element, so that the first network element may subsequently communicate with the serving node based on the information.

In a possible implementation, the registration request further includes authentication indication information, and the authentication indication information indicates to authenticate a terminal that requests to join the first group.

Based on the foregoing possible implementation, the serving node may indicate, to the first network element based on the registration request, that the terminal that requests to join the first group needs to be authenticated.

In a possible implementation, the method further includes: sending a policy update request to the first network element, where the policy update request is for requesting to update policy information of the first group, the policy information of the first group indicates a policy for the terminal in the first group to access the core network, and the policy update request includes the identifier of the first group.

Based on the foregoing possible implementation, the serving node may request the first network element to update the policy information of the first group.

In a possible implementation, the method further includes: receiving the identifier of the first group allocated by the first network element to the first group.

Based on the foregoing possible implementation, the serving node may obtain the identifier of the first group from the first network element, to subsequently transmit information at a granularity of a group to the first network element based on the identifier of the first group.

According to a sixth aspect, a communication apparatus is provided, to implement the foregoing methods. The communication apparatus may be the first network element in the first aspect; or the communication apparatus may be the second network element in the second aspect; or the communication apparatus may be the terminal in the third aspect; or the communication apparatus may be the third network element in the fourth aspect; or the communication apparatus may be the serving node in the fifth aspect. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the sixth aspect, in a possible implementation, the communication apparatus may include a processing module and an interface module. The processing module may be configured to implement a processing function in any one of the foregoing aspects and any one of the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

With reference to the sixth aspect, in a possible implementation, the interface module includes a sending module and a receiving module that are respectively configured to implement a sending function and a receiving function in any one of the foregoing aspects or the possible implementations of the foregoing aspects.

According to a seventh aspect, a communication apparatus is provided, and includes a processor. The processor is configured to: after being coupled to a memory and reading instructions in the memory, perform, according to the instructions, the method according to any one of the foregoing aspects. The communication apparatus may be the first network element in the first aspect; or the communication apparatus may be the second network element in the second aspect; or the communication apparatus may be the terminal in the third aspect; or the communication apparatus may be the third network element in the fourth aspect; or the communication apparatus may be the serving node in the fifth aspect.

With reference to the seventh aspect, in a possible implementation, the communication apparatus further includes a memory. The memory is configured to store program instructions and data. Optionally, the memory is integrated with the processor, or the memory is independent of the processor.

With reference to the seventh aspect, in a possible implementation, the communication apparatus is a chip or a chip system. Optionally, when the communication apparatus is the chip system, the communication apparatus may include a chip, or may include a chip and another discrete device.

According to an eighth aspect, a communication apparatus is provided, and includes a processor and an interface circuit. The interface circuit is configured to receive a computer program or instructions, and transmit the computer program or instructions to the processor. The processor is configured to execute the computer program or instructions, to cause the communication apparatus to perform the method according to any one of the foregoing aspects. The communication apparatus may be the first network element in the first aspect; or the communication apparatus may be the second network element in the second aspect; or the communication apparatus may be the terminal in the third aspect; or the communication apparatus may be the third network element in the fourth aspect; or the communication apparatus may be the serving node in the fifth aspect.

With reference to the eighth aspect, in a possible implementation, the communication apparatus is a chip or a chip system. Optionally, when the communication apparatus is the chip system, the communication apparatus may include a chip, or may include a chip and another discrete device.

According to a ninth aspect, a computer-readable storage medium is provided. The computer-readable storage medium stores instructions. When the instructions are run on a computer, the computer is caused to perform the method according to any one of the foregoing aspects.

According to a tenth aspect, a computer program product including instructions is provided. When the computer program product runs on a computer, the computer is caused to perform the method according to any one of the foregoing aspects.

According to an eleventh aspect, a communication system is provided. The communication system includes a first network element configured to perform the method according to the first aspect and a third network element configured to perform the method according to the fourth aspect.

With reference to the eleventh aspect, in a possible implementation, the communication system further includes at least one of the following: a second network element configured to perform the method according to the second aspect, or a serving node configured to perform the method according to the fifth aspect.

For technical effects achieved in any one of the possible implementations of the sixth aspect to the eleventh aspect, refer to the technical effects achieved in any one of the first aspect to the fifth aspect or different possible implementations of the first aspect to the fifth aspect. Details are not described herein again.

It may be understood that the solutions in the foregoing aspects may be combined if the solutions are not contradictory.

### BRIEF DESCRIPTION OF DRAWINGS

FIG. 1 is a diagram of a traffic scenario according to this application;
FIG. 2 is a diagram of an architecture of a communication system according to this application;
FIG. 3 is a diagram of an architecture of a 5th generation (5th generation, 5G) network according to this application;
FIG. 4 is a diagram of a hardware structure of a communication apparatus according to this application;
FIG. 5 is a schematic flowchart 1 of a communication method according to this application;
FIG. 6 is a schematic flowchart 2 of a communication method according to this application;
FIG. 7A and FIG. 7B are a schematic flowchart 3 of a communication method according to this application; and
FIG. 8 is a diagram of a structure of a communication apparatus according to this application.

### DESCRIPTION OF EMBODIMENTS

In a core network, a group is usually maintained by a UDM network element. For example, first, when a group is created, a mapping relationship between the group and a group member needs to be preset in the UDM network element, and is maintained by the UDM network element. In addition, when a terminal joins the group, an AF network element needs to trigger, through an NEF network element, the UDM network element to modify group member subscription data maintained by the UDM network element. The foregoing method for maintaining the group by the UDM network element is complex, and is not suitable for an increasingly complex communication scenario.

For example, the foregoing method requires specifying an affiliation relationship between the group and the group member when the group is created, and therefore is not applicable to a scenario in which a group member is not determined. Using a scenario of watching a performance or event live (hereinafter referred to as an event scenario) as an example, because people who purchase tickets and people who watch the performance or event live may be different, group members cannot be determined, and the UDM network element cannot maintain a group by using the foregoing method.

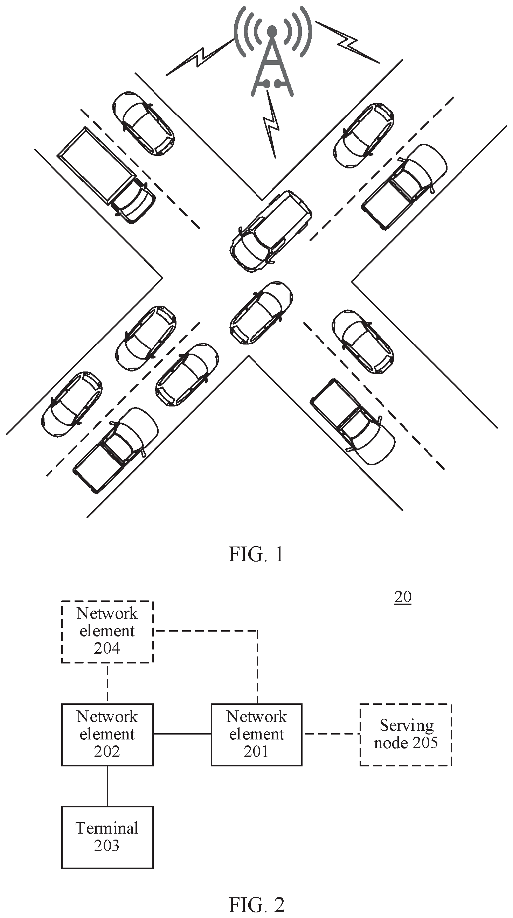

For another example, in the foregoing method, when the terminal joins the group, the AF network element needs to trigger, through the NEF network element, the UDM network element to modify the group member subscription data, and this procedure is complex, and leads to a long delay (usually reaching a second level). Therefore, the method is not applicable to a scenario in which a group member dynamically changes. Using a traffic scenario shown in FIG. 1 as an example, to improve communication security, a network may collect information such as positions, speeds, and directions of traffic participants at an intersection shown in FIG. 1, perform collision analysis and determining, and push collision warning information to the traffic participant as required. However, traffic participants at the intersection shown in FIG. 1 are different at different moments. Therefore, if the traffic participants join a group by using the foregoing method, the traffic participant cannot join the group in time, and consequently the information collected by the network is inaccurate, or the collision warning information is not pushed to traffic participants who need it in time.

To resolve the foregoing problem, this application provides a communication method. In the method, a first network element in a core network may receive a request for allowing a terminal to access the core network, and when it is determined that the terminal is allowed to join a first group, store an association relationship between an identifier of the first group and an identifier of the terminal. In the foregoing process, the first network element does not need to preset a mapping relationship between the first group and a group member of the first group, and an AF network element does not need to trigger, through an NEF network element, a UDM network element to modify group member subscription data. Instead, the first network element stores the association relationship between the identifier of the first group and the identifier of the terminal based on the request for allowing the terminal to access the core network. Therefore, in the method, the mapping relationship between the first group and the group member of the first group can be dynamically maintained, simplifying a procedure of joining the group by the terminal, and helping the terminal flexibly join the first group and access the core network by using the identifier of the first group. Therefore, for the event scenario, the network does not need to prestore the mapping relationship between the group and the group member, but dynamically maintains the group based on the request. For the traffic scenario, the traffic participants can quickly and flexibly join the group to support data collection and collision warning information push at a granularity of a group in the traffic scenario.

The following describes implementations of this application in detail with reference to the accompanying drawings.

The method provided in this application may be applied to various communication systems. For example, the communication system may be a long term evolution (long term evolution, LTE) system, a 5G communication system, a wireless fidelity (wireless fidelity, Wi-Fi) system, a 3rd generation partnership project (3rd generation partnership project, 3GPP)-related communication system, a future evolved communication system (for example, a 6th generation (6th generation, 6G) communication system), or a system integrating a plurality of systems. This is not limited. 5G may also be referred to as new radio (new radio, NR). The method provided in this application is described below by using a communication system 20 shown in FIG. 2 as an example. FIG. 2 is merely a diagram, and does not constitute a limitation on an application scenario of the technical solutions provided in this application.

FIG. 2 is a diagram of an architecture of the communication system 20 according to this application. In FIG. 2, the communication system 20 may include a network element 201 (corresponding to the first network element in the summary), a network element 202 (corresponding to the third network element in the summary), and a terminal 203 (corresponding to the terminal in the summary). Optionally, the communication system 20 further includes at least one of the following: a network element 204 (corresponding to the second network element in the summary) or a serving node 205 (corresponding to the serving node in the summary).

In this application, the network element 201 may allow the terminal, for example, the terminal 203, to initiate a procedure of accessing a core network. For example, the terminal 203 may obtain an identifier of a first group, and send a core network access request to the network element 202. The core network access request is for requesting to allow the terminal to access the core network, and the request includes the identifier of the first group. After receiving the core network access request from the terminal, the network element 202 sends a first request to the network element 201 based on the request. The first request is for requesting to allow the terminal to access the core network, and the first request includes the identifier of the first group. After receiving the first request from the network element 202, when it is determined that the terminal is allowed to join the first group, the network element 201 stores an association relationship between the identifier of the first group and an identifier of the terminal. In this way, the terminal 203 can join the first group, and subsequently, the terminal 203 can access the core network by using the identifier of the first group.

Optionally, the network element 202 may send a policy request to the network element 204. The policy request is for requesting a policy for the terminal 203 to access the core network. The policy request includes the identifier of the first group. After receiving the policy request, the network element 204 may determine policy information of the first group based on the identifier of the first group, and send first policy information to the network element 202 based on the policy information of the first group and information about the terminal 203. The policy information of the first group indicates a policy for a terminal in the first group to access the core network, the information about the terminal 203 includes subscription information of the terminal 203 or access information of the terminal 203, and the first policy information indicates the policy for the terminal 203 to access the core network. After receiving the first policy information, the network element 202 executes the first policy information. In this way, the terminal 203 can access the core network by using the policy indicated by the first policy information.

Optionally, the network element 201 may send an authentication request to the serving node 205. The authentication request may be for requesting to verify whether the terminal 203 is allowed to join the first group, and the authentication request includes the identifier of the first group and the identifier of the terminal. After receiving the authentication request, the serving node 205 may authenticate the terminal 203 based on the authentication request, and send an authentication result to the network element 201. The authentication result indicates whether the terminal 203 is allowed to join the first group. In this way, the terminal 203 can be verified, to determine whether the terminal 203 can join the first group.

Optionally, the network element 202 may be further responsible for collecting statistics on and monitoring resources, such as network traffic and duration, of an operator network used by a user to access a subnet. The subnet is a network established in a specific area, for example, a network established in a subnet place such as an enterprise, a campus, or a stadium.

Optionally, the serving node 205 may be further responsible for performing charging for a member in the group.

In this application, the network element 201, the network element 202, or the network element 204 is a core network element. At least two of the three network elements may be a same core network element, or the three network elements are different core network elements. This is not limited.

For example, the network element 201 is an existing network element in the core network, for example, a UDM network element, a UDR network element, or a PCF network element. Alternatively, the network element 201 is a newly added network element in the core network, for example, a GDMF network element. It should be understood that the GDMF network element is merely an example of a name of the network element 201. During specific application, the network element 201 may alternatively be named in another naming manner, for example, a group management function network element or a group function network element. This is not limited. The network element 202 may be a CP network element, for example, an AMF network element or an SMF network element. The network element 204 may alternatively be a CP network element, for example, a PCF network element or a GDMF network element.

In this application, the serving node 205 is configured to provide a service for the terminal in the first group. For example, the serving node 205 is a node in a subnet, a node over the top (over the top, OTT) of a third-party operator, or a serving node of an operator. The node in the subnet may provide a subnet service, for example, an extended reality (extended reality, XR) games, augmented reality (augmented reality, AR) navigation, or an immersive conferencing, for a subnet user (for example, a visitor, a member, or an employee in a subnet place). The node in the subnet may be deployed by a subnet tenant, or deployed by a subnet operator, or deployed by a cross-subnet operator. The subnet tenant is an owner of the subnet. The subnet operator may deploy the subnet for the subnet tenant. The cross-subnet operator may respectively deploy subnets for a plurality of subnet tenants. In an example, the serving node 205 is an application function (application function, AF) network element, an authentication, authorization, and accounting (authentication, authorization, and accounting, AAA) network element, or a network element having AF and AAA functions. Therefore, the serving node 205 may be replaced with an AF/AAA network element.

In this application, the terminal 203 is a device having a wireless transceiver function. The terminal may be deployed on land, including an indoor device, an outdoor device, a handheld device, or a vehicle-mounted device; or may be deployed on water (for example, on a ship); or may be deployed in the air (for example, on an airplane, a balloon, or a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device, a vehicle-mounted device (for example, a car, a bicycle, an electric vehicle, an airplane, a ship, a train, or a high-speed railway), a wearable device (for example, a smartwatch, a smart band, or a pedometer), or a compute device having a wireless communication function. For example, the UE may be a mobile phone (mobile phone), a tablet computer, a notebook computer, a palmtop computer, a mobile internet device (mobile internet device, MID), a satellite terminal, or a computer having a wireless transceiver function. The UE may alternatively be a virtual reality (virtual reality, VR) terminal device, an augmented reality (augmented reality, AR) terminal device, a wireless modem (modem), a smart point of sale (point of sale, POS) machine, customer-premises equipment (customer-premises equipment, CPE), a smart robot, a robot arm, a workshop device, a smart home device (such as a refrigerator, a television, an air conditioner, or an electric meter), a wireless terminal in industrial control, a wireless terminal in self-driving, a wireless terminal in telemedicine, a wireless terminal in a smart grid (smart grid), a wireless terminal in transportation security, a wireless terminal in a smart city (smart city), a wireless terminal in a smart home (smart home), a vehicle-mounted terminal, a road side unit (road side unit, RSU) having a terminal function, a flight device (for example, a smart robot, a hot air balloon, an uncrewed aerial vehicle, or an airplane), or the like. The terminal may alternatively be another device having a terminal function. For example, the terminal may be a device that functions as a terminal in device-to-device (device-to-device, D2D) communication.

By way of an example but not a limitation, the terminal in this application may be a wearable device. The wearable device may also be referred to as a wearable smart device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable smart devices include full-featured and large-sized devices that can implement complete or partial functions without relying on smartphones, for example, smart watches or smart glasses; and include devices that focus only on one type of application function and that need to be used together with other devices such as smartphones, for example, various smart bands or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network with human-machine interconnection and thing-thing interconnection. The terminal in this application may be a terminal in machine type communication (machine type communication, MTC). The terminal in this application may be a vehicle-mounted module, a vehicle-mounted module, a vehicle-mounted component, a vehicle-mounted chip, or a vehicle-mounted unit that is built in a vehicle as one or more components or units. The vehicle can implement the method in this application through the built-in vehicle-mounted module, vehicle-mounted module, vehicle-mounted component, vehicle-mounted chip, or vehicle-mounted unit. The terminal in this application may be a transportation vehicle, for example, a vehicle. Therefore, this application may be applied to the internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

Optionally, the communication system 20 is applicable to a 5G network currently in discussion, another future network, or the like. This is not specifically limited in embodiments of this application.

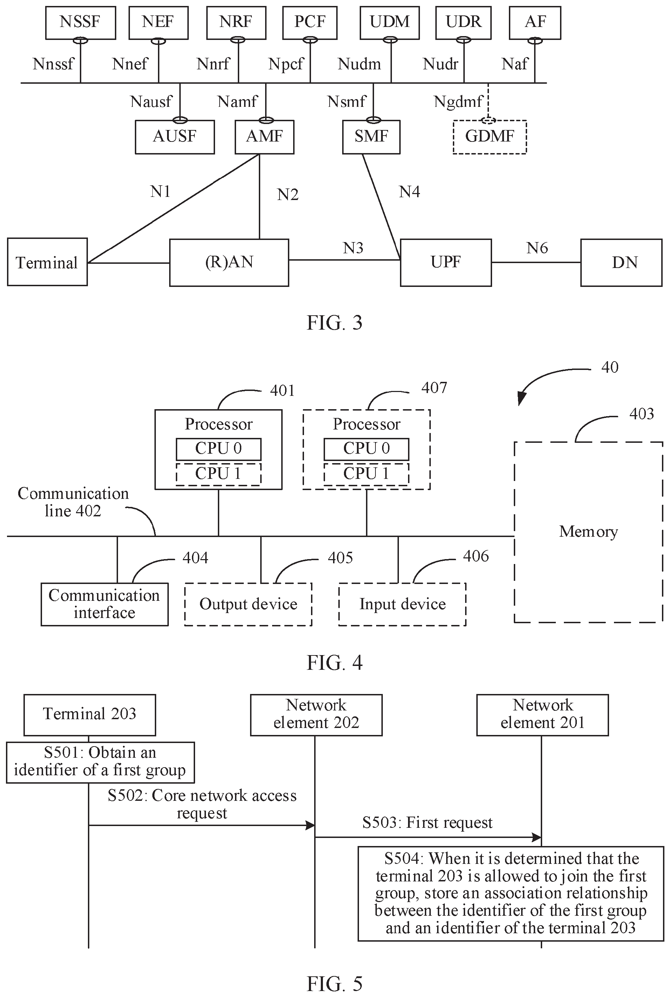

For example, the communication system 20 is applicable to a 5G network shown in FIG. 3. The 5G network includes a network slice selection function (network slice selection function, NSSF) network element, an NEF network element, a network repository function (network repository function, NRF) network element, a PCF network element, a UDM network element, a UDR network element, an AF network element, an authentication server function (authentication server function, AUSF) network element, an AMF network element, an SMF network element, a user plane function (user plane function, UPF) network element, a radio access network (radio access network, RAN) node, a terminal, and a data network (data network, DN). Optionally, the 5G network further includes a GDMF network element.

In FIG. 3, the terminal accesses the 5G network through the RAN node, and the terminal communicates with the AMF network element through an N1 interface (N1 for short); the RAN node communicates with the AMF network element through an N2 interface (N2 for short), and communicates with the UPF network element through an N3 interface (N3 for short); and the SMF network element communicates with the UPF network element through an N4 interface (N4 for short), and the UPF network element accesses the DN through an N6 interface (N6 for short). In addition, the network elements such as the AUSF network element, the AMF network element, the SMF network element, the GDMF network element, the NSSF network element, the NEF network element, the NRF network element, the PCF network element, the UDM network element, the UDR network element, and the AF network element shown in FIG. 3 may interact with each other through a service-based interface. For example, a service-based interface exhibited by the AUSF network element is Nausf. A service-based interface exhibited by the AMF network element is Namf. A service-based interface exhibited by the SMF network element is Nsmf. A service-based interface exhibited by the GDMF network element is Ngdmf. A service-based interface exhibited by the NSSF network element is Nnssf. A service-based interface exhibited by the NEF network element is Nnef. A service-based interface exhibited by the NRF network element is Nnrf. A service-based interface exhibited by the PCF network element is Npcf. A service-based interface exhibited by the UDM network element is Nudm. A service-based interface exhibited by the UDR network element is Nudr. A service-based interface exhibited by the AF network element is Naf.

It may be understood that a device or an entity corresponding to the network element 201 in the communication system 20 is the UDM network element, the UDR network element, the PCF network element, or the GDMF network element in the 5G network shown in FIG. 3. A network element or an entity corresponding to the network element 202 in the communication system 20 is the AMF network element or the SMF network element in the 5G network shown in FIG. 3. A device or an entity corresponding to the terminal 203 in the communication system 20 is the terminal in the 5G network shown in FIG. 3. A device or an entity corresponding to the network element 204 in the communication system 20 is the PCF network element or the GDMF network element in the 5G network shown in FIG. 3. A device or an entity corresponding to the serving node 205 in the communication system 20 is the AF in the 5G network shown in FIG. 3.

It may be understood that the communication system 20 shown in FIG. 2 is merely used as an example, and is not intended to limit the technical solutions of this application. A person skilled in the art should understand that, in a specific implementation process, the communication system 20 may further include another network element, and quantities of network elements and terminals may be determined based on a specific requirement. This is not limited.

Optionally, each network element or device (for example, the network element 201, the network element 202, the terminal 203, the network element 204, or the serving node 205) in FIG. 2 of this application may also be referred to as a communication apparatus, which may be a general-purpose device or a dedicated device. This is not specifically limited in this application.

Optionally, a related function of each network element or device (for example, the network element 201, the network element 202, the terminal 203, the network element 204, or the serving node 205) in FIG. 2 of this application may be implemented by one device, or may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or a virtualized function instantiated on a platform (for example, a cloud platform).

During specific implementation, each network element or device (for example, the network element 201, the network element 202, the terminal 203, the network element 204, or the serving node 205) in FIG. 2 of this application may use a composition structure shown in FIG. 4, or include components shown in FIG. 4. FIG. 4 is a diagram of a hardware structure of a communication apparatus to which this application is applicable. The communication apparatus 40 includes at least one processor 401 and at least one communication interface 404, to implement the method provided in this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path, such as a bus, for transmitting information between the foregoing components.

The communication interface 404 is configured to communicate with another device or a communication network. The communication interface 404 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be used to carry or store expected program code in a form of an instruction or a data structure and that can be accessible by a computer, but is not limited thereto. The memory may exist independently, and is coupled to the processor 401 through the communication line 402. Alternatively, the memory 403 may be integrated with the processor 401. Usually, the memory provided in this application may be non-volatile.

The memory 403 is configured to store computer-executable instructions for performing the solutions provided in this application, and the processor 401 controls execution of the computer-executable instructions. The processor 401 is configured to execute the computer-executable instructions stored in the memory 403, to implement the method provided in this application. Alternatively, optionally, in this application, the processor 401 may perform a processing-related function in the following method in this application, and the communication interface 404 is responsible for communicating with another device or a communication network. This is not specifically limited in this application.

Optionally, the computer-executable instructions in this application may also be referred to as application program code. This is not specifically limited in this application.

The coupling in this application may be an indirect coupling or communication connection between apparatuses, units, or modules in an electrical form, a mechanical form, or another form, and is used for information exchange between the apparatuses, the units, or the modules.

In an embodiment, the processor 401 may include one or more CPUs, for example, a CPU 0 and a CPU 1 in FIG. 4.

In an embodiment, the communication apparatus 40 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive a user input in a plurality of manners. For example, the input device 406 may be a mouse, a keyboard, a touchscreen device, or a sensor device.

It may be understood that the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

The following describes the method provided in this application with reference to the accompanying drawings. Each network element or device in the following embodiments may have the components shown in FIG. 4. Details are not described again.

It may be understood that names of messages between network elements, names of parameters in the messages, or the like in the following embodiments of this application are merely examples, and may have other names during specific implementation. This is not specifically limited in this application.

It may be understood that, in this application, "/" may indicate an "or" relationship between associated objects. For example, A/B may indicate A or B. "And/or" may indicate that there are three relationships between associated objects. For example, A and/or B may indicate the following three cases: Only A exists, both A and B exist, and only B exists, where A and B may be in a singular form or a plural form. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses the three elements A, B, and C as an example to describe an optional item of the project. When there are more elements in the representation, a meaning of the representation may be obtained according to the foregoing rules.

For ease of description of the technical solutions of this application, in this application, terms "first", "second", and the like may be used to distinguish between technical features with a same or similar function. The terms such as "first" and "second" do not limit a quantity and an execution sequence, and the terms such as "first" and "second" do not necessarily imply a definite difference. In this application, the term such as "example" or "for example" indicates an example, an illustration, or a description. Any embodiment or design scheme described with "example" or "for example" should not be construed as being more preferred or advantageous than another embodiment or design scheme. Use of the term such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not be construed as any limitation on implementation processes of this application.

It may be understood that, in this application, "when", "in a case in which", and "if" all mean that corresponding processing is performed in an objective case, are not intended to limit time, do not require to necessarily have a determining action during implementation, and do not mean that there is another limitation.

It may be understood that, in some scenarios, some optional features in this application may be independently implemented without relying on another feature, for example, a solution on which the optional features are currently based, to resolve a corresponding technical problem and achieve corresponding effects. Alternatively, in some scenarios, the optional features may be combined with another feature based on a requirement. Correspondingly, an apparatus provided in this application may also correspondingly implement these features or functions. Details are not described herein.

It may be understood that, in this application, a same step, or steps or technical features that have a same function may be mutually referenced in different embodiments.

An example in which the communication system 20 shown in FIG. 2 is used below to describe the communication method provided in this application.

It may be understood that, in this application, the network element 201, the network element 202, the terminal 203, the network element 204, or the serving node 205 may perform some or all steps in this application. These steps are merely examples. In this application, other steps or variations of the steps may be further performed. In addition, the steps may be performed in an order different from an order shown in this application, and not all steps in this application are necessarily performed.

It may be understood that, in the following method provided in this application, the network element 201, the network element 202, the terminal 203, the network element 204, and the serving node 205 are used as execution entities illustrated in the interaction to illustrate the method. However, an execution entity illustrated in the interaction is not limited in this application. For example, a network element (for example, the network element 201, the network element 202, or the network element 204) in a method provided in the following embodiments of this application may be a chip, a chip system, or a processor that supports the network element in implementing the method, or may be a logical node, a logical module, or software that can implement all or some functions of the network element; the terminal 203 in the method provided below in this application may be a chip, a chip system, or a processor that supports the terminal 203 in implementing the method, or may be a logical node, a logical module, or software that can implement all or some functions of the terminal 203; and the serving node 203 in the method provided below in this application may be a chip, a chip system, or a processor that supports the serving node 203 in implementing the method, or may be a logical node, a logical module, or software that can implement all or some functions of the serving node 203.

FIG. 5 shows a communication method according to this application. The communication method may include the following steps.

S501: The terminal 203 obtains an identifier of a first group.

In a possible implementation, the terminal 203 obtains the identifier of the first group from the serving node 205 through an application layer. The serving node 205 is configured to provide a service for a terminal in the first group. The identifier of the first group indicates the first group.

In an example, the serving node 205 sends first information to the terminal 203, where the first information may be for determining the identifier of the first group. After receiving the first information, the terminal 203 may determine the identifier of the first group based on the first information. The first information includes the identifier of the first group. For example, the first information includes coded information, and the terminal 203 obtains the identifier of the first group based on a code indicated by the coded information. The code indicated by the coded information is a code of a character, a two-dimensional code, a bar code, or the like. The character may include a digit, a letter, and another symbol. Using a traffic scenario as an example, the serving node 205 may broadcast the first information, and after entering a coverage area of the serving node 205, the terminal 203 may receive the first information, and obtain the identifier of the first group based on the first information.

In another possible implementation, the terminal 203 obtains the identifier of the first group by using a sensing function (for example, a camera function or an identification function). Using an event scenario as an example, the terminal 203 scans a two-dimensional code on a paper ticket or an electronic ticket by using the camera function, to obtain the identifier of the first group.

S502: The terminal 203 sends a core network access request to the network element 202. Correspondingly, the network element 202 receives the core network access request from the terminal 203.

In this application, the core network access request may be for requesting to allow the terminal 203 to access the core network, or for requesting to allow the terminal 203 to access a core network by using the identifier of the first group.

In a possible design, the core network access request includes the identifier of the first group. Optionally, the core network access request further includes an identifier of the terminal 203. For example, the terminal 203 has been registered with an operator network (for example, a subscriber identity module (subscriber identity module, SIM) card is installed in the terminal 203), and the core network access request includes the identifier of the terminal 203. For another example, if the terminal 203 has not been registered with an operator network (for example, no SIM card is installed in the terminal 203), the core network access request does not include the identifier of the terminal 203.

For example, the identifier of the terminal 203 is a subscription permanent identifier (subscription permanent identifier, SUPI), a generic public subscription identifier (generic public subscription identifier, GPSI), a globally unique temporary identifier (global unique temporary identifier, GUTI), a subscription concealed identifier (subscription concealed identifier, SUCI), or the like. It should be understood that the identifier is merely an example of the identifier of the terminal 203. During specific application, the identifier of the terminal 203 may be another identifier, for example, an identifier allocated by a future network (for example, a 6G network) to the terminal 203. This is not limited.

In a possible design, the core network access request is carried in a registration request message, a session (for example, protocol data unit (protocol data unit, PDU) session) establishment request message, or a session (for example, PDU session) modification request message that is of the terminal 203.

S503: The network element 202 sends a first request to the network element 201 based on the core network access request. Correspondingly, the network element 201 receives the first request from the network element 202.

In this application, the first request may be for requesting to allow the terminal 203 to access the core network, or for requesting to allow the terminal 203 to access the core network by using the identifier of the first group. Content included in the first request is related to content included in the core network access request. For example, the content included in the first request is the same as the content included in the core network access request. For another example, the first request is obtained by processing the core network access request, for example, re-encapsulating information, deleting information, adding information, or modifying information.

In a possible design, the first request includes the identifier of the first group. Optionally, the first request further includes the identifier of the terminal 203.

It may be understood that, if the identifier of the terminal 203 included in the core network access request is the GUTI or the SUCI, after receiving the core network access request, the network element 202 may map the GUTI or the SUCI to an identifier that can be identified by the core network, such as the SUPI, and send the first request, where the first request includes the identifier of the first group and the SUPI. Optionally, if the network element 202 stores the GPSI corresponding to the SUPI, the first request may further include the GPSI.

In a possible implementation, after receiving the core network access request, the network element 202 determines the network element 201 based on at least one of the identifier of the first group or position information of the terminal 203, and sends the first request to the network element 201. The position information of the terminal 203 indicates a position of the terminal 203, for example, a cell in which the terminal 203 is located or a tracking area in which the terminal 203 is located, and may be obtained by the network element 202 from an access network node accessed by the terminal 203.

For example, the network element 202 sends at least one of the identifier of the first group or the position information of the terminal 203 to an NRF network element (for example, the NRF network element in FIG. 3). After receiving the foregoing information, the NRF network element queries information about the network element 201 based on the information, and sends the information about the network element 201 to the network element 202. After receiving the information about the network element 201, the network element 202 may determine the network element 201 based on the information, and send the first request to the network element 201. The information about the network element 201 may include address information of the network element 201. Optionally, the information about the network element 201 further includes service information of the network element 201. The address information of the network element 201 may include at least one of the following: an internet protocol (internet protocol, IP) address of the network element 201, a fully qualified domain name (fully qualified domain name, FQDN) of the network element 201, or a host name (host name) of the network element 201. The service information of the network element 201 indicates a network function (network function, NF) service (NF service) provided by the network element 201, an NF capability provided by the network element 201, or the like.

S504: When it is determined that the terminal 203 is allowed to join the first group, the network element 201 stores an association relationship between the identifier of the first group and the identifier of the terminal 203.

In this application, "allowing the terminal 203 to join the first group" may be replaced with "allowing the terminal 203 to access the core network by using the identifier of the first group". That the terminal 203 is allowed to access the core network by using the identifier of the first group may be understood as that the terminal 203 is allowed to access the first group, or the terminal 203 is authorized to access the first group, or the terminal 203 is allowed to use a policy of the first group, or the terminal 203 is authorized to use a policy of the first group, or the terminal 203 is allowed to access a service of the first group, or the terminal 203 is authorized to access a service of the first group.

It may be understood that, if the first request includes the identifier of the terminal 203, after it is determined that the terminal 203 is allowed to join the first group, the network element 201 may directly store the association relationship between the identifier of the first group and the identifier of the terminal 203. If the first request does not include the identifier of the terminal 203, the network element 201 may allocate an identifier to the terminal 203, or the network element 201 may obtain, from the serving node 205, an identifier allocated by the serving node 205 to the terminal 203, and then store the association relationship between the identifier of the first group and the allocated identifier. Subsequently, the network element 201 may further send, to the terminal 203 through the network element 202, the identifier allocated by the network element 201 or the serving node 205. The allocated identifier is a temporary identifier of the terminal 203.

In a possible implementation, after receiving the first request, the network element 201 directly determines that the terminal 203 is allowed to join the first group. For example, if the first group is open to all terminals, that is, all terminals that request to join the first group can join the first group, after receiving the first request, the network element 201 directly determines that the terminal 203 is allowed to join the first group.

In another possible implementation, after receiving the first request, the network element 201 may request the serving node 205 to authenticate the terminal 203. For example, if the first group is not open to all terminals, the network element 201 sends an authentication request to the serving node 205, to request to verify whether the terminal 203 is allowed to join the first group. The authentication request includes the identifier of the first group and the identifier of the terminal 203. After receiving the authentication request, the serving node 205 authenticates the terminal 203. For example, the serving node 205 indicates, through the network element 201 or the network element 202, the terminal 203 to report identity information of the terminal 203 (for example, an account name, a password, or identity certificate information of a user corresponding to the terminal 203). After receiving the indication, the terminal 203 reports the identity information of the terminal 203 through the network element 201 or the network element 202, so that the serving node 205 verifies the identity information of the terminal 203. Subsequently, the serving node 205 sends an authentication result to the network element 201. The authentication result indicates that the terminal 203 is allowed to join the first group, or indicates that the terminal 203 is not allowed to join the first group.

It may be understood that, if the authentication result indicates that the terminal 203 is allowed to join the first group, the network element 201 determines that the terminal 203 is allowed to join the first group. If the authentication result indicates that the terminal 203 is not allowed to join the first group, the network element 201 determines that the terminal 203 is not allowed to join the first group. In this case, the network element 201 does not store the association relationship between the identifier of the first group and the identifier of the terminal 203, and indicates, to the terminal 203 through the network element 202, that the terminal 203 is not allowed to join the first group. The following embodiment of this application is described by using an example in which the network element 201 determines that the terminal 203 is allowed to join the first group.

Optionally, in the foregoing process, information transmitted between the network element 201 and the serving node 205, for example, the authentication request or the authentication result, or information transmitted between the serving node 205, the network element 202, and the terminal 203 may be carried in an extensible authentication protocol (extensible authentication protocol, EAP) message.

Optionally, the foregoing identifier allocated by the serving node 205 to the terminal 203 may be included in the authentication result.

Optionally, the network element 201 sends a response message of the first request (hereinafter referred to as a first response message) to the network element 202. The first response message indicates that the terminal is allowed to join the first group. After receiving the first response message, the network element 202 may send, to the terminal 203, a response message of the core network access request (hereinafter referred to as a second response message). The second response message may indicate that the terminal 203 is allowed to join the first group. Optionally, the first response message and the second response message include the identifier allocated by the network element 201 to the terminal 203, or the first response message and the second response message include the identifier allocated by the serving node 205 to the terminal 203. In other words, the identifier allocated by the network element 201 or the serving node 205 to the terminal 203 may be sent to the network element 202 by using the first response message. Then, the network element 202 may send the identifier to the terminal 203 by using the second response message, or associate the identifier with the identifier of the first group, so that the network element 202 queries a group to which the terminal 203 belongs.

It should be understood that, if the network element 201 determines that the terminal 203 is not allowed to join the first group, the first response message and the second response message may indicate that the terminal 203 is not allowed to join the first group.

Based on the method shown in FIG. 5, the terminal 203 may initiate the core network access request to the network element 201 through the network element 202, where the request includes the identifier of the first group that the terminal 203 requests to join. The network element 201 may determine, based on the request of the terminal 203, whether the terminal 203 is allowed to join the first group, and when the terminal is allowed to join the first group, store the association relationship between the identifier of the first group and the identifier of the terminal 203. In the foregoing process, the network element 201 may dynamically maintain a mapping relationship between the first group and a group member of the first group, thereby simplifying a procedure of joining the first group by the terminal, and helping the terminal flexibly join the first group and access the core network by using the identifier of the first group. It may be understood that, in an event scenario, a user who watches a performance or an event may initiate the core network access request based on a requirement, and join the first group, to receive a message that is pushed by a network and that is at a granularity of a group. In a traffic scenario, a user who enters the intersection shown in FIG. 1 may initiate the core network access request, and join the first group, to send data at a granularity of a group to the network, or receive collision warning information that is pushed by the network and that is at a granularity of a group.

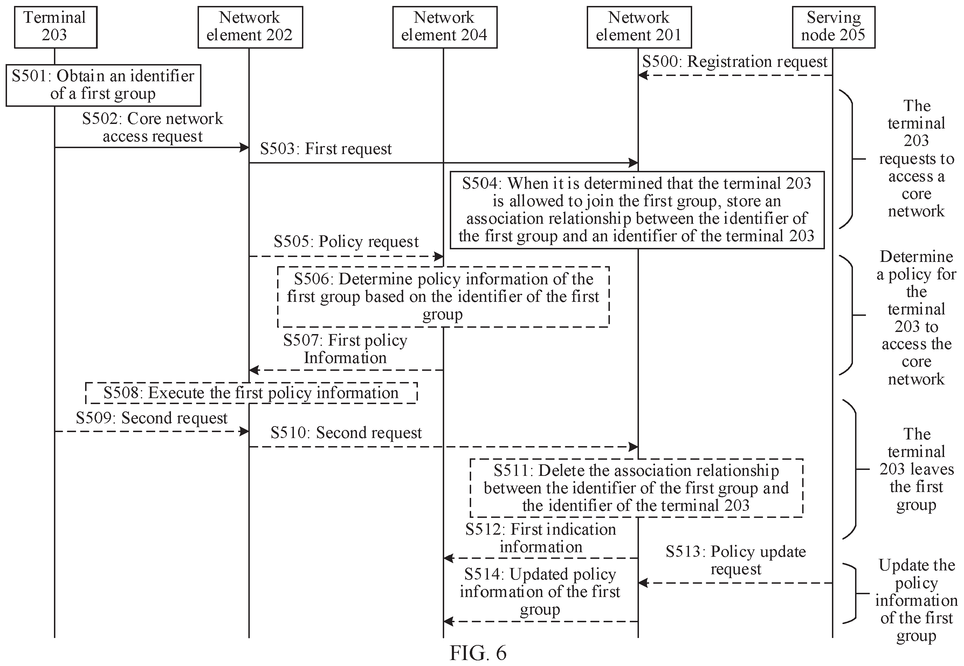

Optionally, in a possible implementation of the method shown in FIG. 5, before the terminal 203 initiates the core network access request, the serving node 205 may register information about the serving node 205 with the network element 201, so that the network element 201 can access the serving node 205 based on the registered information. Specifically, as shown in FIG. 6, the method shown in FIG. 5 further includes the following steps.

S500: The serving node 205 sends a registration request to the network element 201. Correspondingly, the network element 201 receives the registration request from the serving node 205.

In a possible design, the registration request includes address information of the serving node 205. Optionally, the registration request further includes at least one of the following: the identifier of the first group, service area information of a first group service, policy information of the first group, or authentication indication information. For example, the registration request includes the address information of the serving node 205 and the identifier of the first group; or the registration request includes the address information of the serving node 205 and the service area information of the first group service; or the registration request includes the address information of the serving node 205 and the policy information of the first group; or the registration request includes the address information of the serving node 205 and the authentication indication information; or the registration request includes the address information of the serving node 205, the identifier of the first group, the service area information of the first group service, the policy information of the first group, and the authentication indication information.

In this application, the address information of the serving node 205 indicates an address of the serving node 205, for example, an IP address of the serving node 205. The first group service is a service that may be provided by the serving node 205 for the first group. The service area information of the first group service indicates an area in which the serving node 205 may provide the first group service. For example, the service area information of the first group service includes at least one of the following: an identifier of the area or geographical location information of the area. The authentication indication information indicates to authenticate a terminal that requests to join the first group. For example, the authentication indication information indicates the serving node 205 to verify identity information of the terminal that requests to join the first group. The policy information of the first group indicates a policy for the terminal in the first group to access the core network, for example, indicates at least one of the following policies: an offloading policy, a charging policy, a traffic control policy, and a service level agreement (service level agreement, SLA) policy. The following describes the policies.

In this application, the offloading policy of the first group may indicate an offloading measure that needs to be used by a member of the first group (that is, the terminal in the first group) to access a packet of a specific service, for example, a local offloading measure, a central offloading measure, or a specific data network access offloading measure. The charging policy of the first group may indicate a charging policy used by the first group service, for example, may indicate a charging method. The charging policy of the first group may further indicate a charging reporting server, a sponsored traffic identifier, and/or the like. The charging method includes a user payment policy, an OTT payment policy, a tenant payment policy, or the like. A tenant is a group that provides the first group service, for example, XX company or XX organization. The sponsored traffic identifier is, for example, a sponsor identifier (Sponsor ID) corresponding to the first group, an OTT identifier corresponding to the first group, or a unique identifier of a tenant. The traffic control policy may include a user service flow offloading policy, a forwarding policy, or the like. The SLA policy may include at least one of the following: a group-granularity user quantity control policy, a traffic quota control policy, or a quality of service (quality of service, QoS) guarantee policy.

It may be understood that, after receiving the registration request, the network element 201 may store information in the registration request. For example, the network element 201 performs a context creation procedure, to store the information in the registration request. Subsequently, the network element 201 may perform a corresponding procedure based on the information in the registration request. For example, if the registration request includes the authentication indication information, in S504, the network element 201 may determine to request the serving node 205 to authenticate the terminal 203. For another example, if the registration request includes the address information of the serving node 205 and the identifier of the first group, in S504, the network element 201 may determine the address information of the serving node 205 corresponding to the identifier of the first group included in the first request, and send the authentication request to the serving node 205 based on the address information. For another example, if the registration request includes the policy information of the first group, after receiving the registration request, the network element 201 may send the policy information of the first group to the network element 204, so that the network element 204 determines, based on the policy information of the first group, the policy for the terminal 203 to access the core network.

In a possible implementation, the registration request is forwarded to the network element 201 through one or more network elements. The following provides descriptions by using an example in which the registration request is forwarded to the network element 201 through an NEF network element.

For example, the serving node 205 sends the registration request to the NEF network element. After receiving the registration request, the NEF network element determines, based on at least one of the identifier of the first group or the service area information of the first group service that is included in the registration request, the information about the network element 201 that can provide a service for the first group, and sends the registration request to the network element 201. For example, the NEF network element stores a correspondence between the identifier of the first group and the information about the network element 201, and sends the registration request to the network element 201 based on the correspondence. For another example, the NEF network element stores a correspondence between the service area of the first group service and the information about the network element 201, and sends the registration request to the network element 201 based on the correspondence. For another example, the NEF network element stores a correspondence among the identifier of the first group, the service area of the first group service, and the information about the network element 201, and sends the registration request to the network element 201 based on the correspondence. In addition, the NEF network element may further process the information in the registration request, and send processed information to the network element 201. For example, the NEF network element may map the identifier of the first group carried in the registration request to an identifier that can be identified by the core network. For another example, the NEF network element may map the service area information of the first group service carried in the registration request to area information that can be identified by the core network. For example, the registration request carries longitude and latitude information or province and city information, and the NEF network element processes the longitude and latitude information or province and city information, and then sends information about a cell/tracking area corresponding to the longitude and latitude or the province/city to the network element 201.

It may be understood that, if the registration request does not include the identifier of the first group, after receiving the registration request, the network element 201 may allocate an identifier to the first group, and send the identifier to the serving node 205. For example, the network element 201 may pre-register a group identifier segment, select an unoccupied identifier from the group identifier segment, and allocate the unoccupied identifier to the first group. For example, the network element 201 registers the group identifier segment with a network element other than the network element 201 in the core network, for example, an AF network element or the NEF network element, so that the network element searches for the network element 201 based on the group identifier segment. It may be understood that, after allocating the identifier of the first group, the network element 201 may store the correspondence between the identifier of the first group and the information included in the registration request.

Optionally, the network element 201 may further send a group identifier list registered with the network element 201 to the NRF network element, or update the group identifier list, so that the network element in the core network queries a group identifier registered with the network element 201 from the NRF network element based on an identifier of the network element 201, or queries the network element 201 based on the group identifier. For example, in S503, after receiving the identifier of the first group sent by the network element 202, the NRF network element may query the group identifier list based on the identifier of the first group, determine the network element 201, and send the information about the network element 201 to the network element 202.

In this application, the group identifier registered with the network element 201 may be understood as an identifier received by the network element 201 by using the registration request and locally stored in the network element 201, or a group identifier allocated by the network element 201 after the network element 201 receives the registration request.

Optionally, in a possible implementation of the method shown in FIG. 5, the network element 202 may request the network element 204 to determine the policy for the terminal 203 to access the core network, so that the terminal 203 accesses the core network according to the policy. Specifically, as shown in FIG. 6, the method shown in FIG. 5 further includes the following steps.

S505: The network element 202 sends a policy request to the network element 204. Correspondingly, the network element 204 receives the policy request from the network element 202.

In this application, the policy request is for requesting the policy for the terminal 203 to access the core network.

In a possible design, the policy request includes the identifier of the first group. Optionally, the policy request further includes the identifier of the terminal 203.

S506: The network element 204 determines the policy information of the first group based on the identifier of the first group.

In a possible implementation, the network element 204 sends a third request to the network element 201. The third request is for requesting to obtain the policy information of the first group, and the third request may include the identifier of the first group. For example, when the policy information of the first group is not stored, the network element 204 sends the third request to the network element 201. After receiving the third request, the network element 201 sends the policy information of the first group to the network element 204. For another example, when the policy information of the first group is stored, the network element 204 locally obtains the policy information of the first group based on the identifier of the first group. It may be understood that, if the network element 204 receives the policy information of the first group before S506, the network element 204 may locally obtain the policy information of the first group. For example, in S504, after it is determined that the terminal 203 is allowed to join the first group, the network element 201 may send the policy information of the first group to the network element 204, or after S500, the network element 201 may send the policy information of the first group to the network element 204. After receiving the policy information of the first group, the network element 204 may locally store the policy information, to locally obtain the policy information subsequently.

Optionally, the network element 204 sends a fourth request to the network element 201. The fourth request is for requesting to associate the identifier of the terminal 203 with the identifier of the first group. The fourth request includes the identifier of the first group. Optionally, the fourth request further includes the identifier of the terminal 203. It may be understood that, after receiving the fourth request, the network element 201 stores the association relationship between the identifier of the first group and the identifier of the terminal 203; or after receiving the fourth request, the network element 201 checks whether the association relationship between the identifier of the first group and the identifier of the terminal 203 has been stored, and if the association relationship has not been stored, the network element 201 stores the association relationship.

Optionally, in S504, the network element 201 performs an operation in which it is determined that the terminal 203 is allowed to join the first group, but does not perform an operation of storing the association relationship between the identifier of the first group and the identifier of the terminal 203, but performs an operation of storing the association relationship after receiving the fourth request.

It may be understood that the network element 204 may implement corresponding functions by invoking different services or respectively carrying corresponding indication information in the third request and the fourth request. For example, the network element 204 requests to obtain the policy information of the first group by invoking a service 1 (for example, an Ngdmf_DataManagement_Get service) by using the third request, and requests to associate the identifier of the terminal 203 with the identifier of the first group by invoking a service 2 (for example, an Ngdmf_Registration_Register service) by using the fourth request. Alternatively, the third request includes indication information 1 indicating to request to obtain the policy information of the first group, and the fourth request includes indication information 2 indicating to request to associate the identifier of the terminal 203 with the identifier of the first group. Alternatively, the network element 204 implements a function of the third request and/or the fourth request by using a first message. For example, the first message includes indication information 3 indicating to skip requesting to obtain the policy information of the first group. In this case, the first message is for requesting to associate the identifier of the terminal 203 with the identifier of the first group, and is not for requesting to obtain the policy information of the first group. Alternatively, the first message includes indication information 4 indicating to skip requesting to associate the identifier of the terminal 203 with the identifier of the first group. In this case, the first message is for requesting to obtain the policy information of the first group, and is not for requesting to associate the identifier of the terminal 203 with the identifier of the first group. Alternatively, the first message includes the identifier of the first group, and does not include the identifier of the terminal 203, to indicate to request to obtain the policy information of the first group, and not to request to associate the identifier of the terminal 203 with the identifier of the first group.

S507: The network element 204 sends first policy information to the network element 202. Correspondingly, the network element 202 receives the first policy information from the network element 204.

In this application, the first policy information is determined based on the policy information of the first group, and indicates a policy for the terminal 203 to access the core network, that is, a policy for the terminal 203 to access the core network by using the identifier of the first group, for example, one or more of an offloading policy, a charging policy, a traffic control policy, or an SLA policy. In other words, the network element 204 may determine, for the terminal 203 based on the policy information of the first group, the policy for the terminal 203 to access the core network by using the identifier of the first group, and indicate the policy to the network element 202.

It may be understood that, when determining the first policy information, the network element 204 may consider the information about the terminal 203, for example, subscription information of the terminal 203 or access information of the terminal 203. The subscription information of the terminal 203 may indicate subscription data at a granularity of the terminal 203, for example, at least one of a subscription bandwidth of the terminal 203 or a subscription slice of the terminal 203. In this way, the network element 204 can make a decision with reference to the subscription data at the granularity of the terminal 203 and subscription information at a granularity of a group, to determine the first policy information. The access information of the terminal 203 may indicate a status of a network accessed by the terminal 203, for example, at least one of network load, a network congestion status, or a regional policy of the network. In this way, the network element 204 can make a decision with reference to the status of the network accessed by the terminal 203 and the subscription information at the granularity of the group, to determine the first policy information.

For example, an example in which the subscription information of the terminal 203 includes the subscription bandwidth of the terminal 203, the subscription bandwidth of the terminal 203 is 200 megabytes (M), and the policy information of the first group indicates that a guaranteed bandwidth of a group member is 300 M is used. The first policy information may indicate that the guaranteed bandwidth of the terminal 203 is 200 M, or indicate that the guaranteed bandwidth of the terminal 203 is less than 300 M.

For example, an example in which the access information of the terminal 203 indicates that the network load of the network accessed by the terminal 203 is high, and the policy information of the first group indicates that the guaranteed bandwidth of the group member is 300 M is used. The first policy information may indicate that the guaranteed bandwidth of the terminal 203 is less than 300 M.

It may be understood that the foregoing is merely an example in which the network element 204 determines the first policy information. During specific application, the network element 204 may alternatively determine the first policy information in another manner, for example, determine the first policy information based on the policy information of the first group, the subscription information of the terminal 203, and the access information of the terminal 203, or further consider information other than the subscription information of the terminal 203 or the access information of the terminal 203 when determining the first policy information. This is not limited.

It may be understood that the first policy information is policy information maintained at a granularity of a group, and the terminal 203 does not need to perform subscription at a granularity of a terminal, thereby avoiding extra overheads. In addition, in the first group, first policy information corresponding to different terminals may be the same or may be different.

Optionally, the network element 204 determines the information about the terminal 203 based on the identifier of the terminal 203 included in the policy request, determines the first policy information based on the information about the terminal 203 and the policy information of the first group, and sends the first policy information to the network element 202.

S508: The network element 202 executes the first policy information.

In a possible implementation, the network element 202 sends a corresponding policy to the network element configured to execute the first policy information, so that the network element that receives the policy executes the corresponding policy. For example, if the first policy information needs to be executed by an access network node, the network element 202 sends the first policy information to the access network node; or if the first policy information needs to be executed by the terminal 203, the network element 202 sends the first policy information to the terminal 203; or if the first policy information needs to be executed by the UPF network element, the network element 202 sends the first policy information to the UPF network element and the access network node; or if the first policy information needs to be executed by the UPF network element and the access network node, the network element 202 sends the first policy information to the UPF network element and the access network node.

Optionally, the first policy information needs to be sent to the terminal 203, and the first policy information may be included in the second response message. After obtaining the first policy information, the terminal 203 may determine that the core network allows the terminal 203 to join the first group.

Optionally, in a possible implementation of the method shown in FIG. 5, if the terminal 203 determines to leave the first group, the terminal 203 may request, through the network element 202, the network element 201 to remove the terminal 203 from the first group. Specifically, as shown in FIG. 6, the method shown in FIG. 5 further includes the following steps.

S509: The terminal 203 sends a second request to the network element 202. Correspondingly, the network element 202 receives the second request from the terminal 203.

In this application, the second request is for requesting to remove the terminal 203 from the first group or is for requesting to leave the first group, and the second request includes the identifier of the terminal 203 and the identifier of the first group. Optionally, the second request further includes second indication information indicating to remove the terminal 203 from the first group or indicating that the terminal 203 requests to leave the first group.

For example, content included in the second request may be in a json format. For example, the second request includes {an identifier of a removed group: the identifier of the first group}.

In a possible implementation, the terminal 203 may determine, based on a local decision, an application-side notification, or a network-side notification, to leave the first group, and send the second request. For example, the terminal 203 locally decides that a service of the first group ends, or receives third indication information from the serving node 205 or the network element 201, and sends the second request to the network element 202. The third indication information may indicate that the service of the first group expires or ends, or indicate that the terminal 203 leaves the first group.

S510: The network element 202 sends the second request to the network element 201. Correspondingly, the network element 201 receives the second request from the network element 202.

It may be understood that, after receiving the second request from the terminal 203, the network element 202 may directly forward the second request to the network element 201; or after receiving the second request from the terminal 203, the network element 202 further processes the second request, for example, re-encapsulates information, adds information, or deletes information, and sends processed information to the network element 201.

S511: The network element 201 deletes the association relationship between the identifier of the first group and the identifier of the terminal 203.

S512: The network element 201 sends first indication information to the network element 204. Correspondingly, the network element 204 receives the first indication information from the network element 201.

In this application, the first indication information indicates to update the policy for the terminal 203 to access the core network, or indicates that the terminal 203 has been removed from the first group, or indicates that the terminal 203 leaves the first group. The first indication information includes the identifier of the terminal 203 and the identifier of the first group. Therefore, after receiving the first indication information, the network element 204 may delete the first policy information, or update the first policy information to second policy information. For example, if the terminal 203 is not registered with the network of the operator or the terminal 203 is disconnected from the network, the network element 204 deletes the first policy information. For another example, the terminal 203 is registered with a network of an operator, and the network element 204 may determine the second policy information based on the information about the terminal 203, and send the second policy information to the network element 202, so that the network element 202 executes the second policy information, where the second policy information indicates a policy for the terminal 203 to access the core network. The second policy information and the first policy information may be the same or different. An example in which the information about the terminal 203 includes subscription information of the terminal 203, the subscription information of the terminal 203 indicates that the subscribed bandwidth of the terminal 203 is 200 M, and the policy information of the first group indicates that the guaranteed bandwidth of the group member is 300 M is used. If the first policy information indicates that the guaranteed bandwidth of the terminal 203 is 300 M, after the terminal 203 leaves the first group, the network element 204 determines the second policy information based on the subscription information of the terminal 203, where the second policy information indicates that the guaranteed bandwidth of the terminal 203 is 200 M.

In a possible design, if the first indication information indicates to update the policy for the terminal 203 to access the core network, the first indication information may include a cause value, and the cause value indicates a reason for updating the policy for the terminal 203 to access the core network. In this example, the reason is that the terminal 203 is removed from the first group or the terminal 203 leaves the first group. Alternatively, if the first indication information indicates to remove the terminal 203 from the first group or that the terminal 203 leaves the first group, the first indication information may be for triggering to update the policy for the terminal 203 to access the core network.

Optionally, in a possible implementation of the method shown in FIG. 5, if the policy information of the first group is updated, the serving node 205 may trigger an update procedure of a group policy. For example, as shown in FIG. 6, the method shown in FIG. 5 further includes the following steps.

S513: The serving node 205 sends a policy update request to the network element 201. Correspondingly, the network element 201 receives the policy update request from the serving node 205.

In this application, the policy update request is for requesting to update the policy information of the first group, for example, delete the policy information of the first group, or update all or some content in the policy information of the first group. The policy update request includes the identifier of the first group. The policy update request indicates information that needs to be updated and that is in the policy information of the first group.

S514: The network element 201 sends updated policy information of the first group to the network element 204. Correspondingly, the network element 204 receives the updated policy information of the first group from the network element 201.

It may be understood that, after receiving the policy update request, the network element 201 locally searches for the policy information of the first group, obtains the updated policy information of the first group with reference to the request, and sends the updated policy information of the first group to the network element 204. The network element 201 further needs to replace some or all of the locally stored policy information of the first group with the updated policy information of the first group.

It may be understood that, after receiving the updated policy information of the first group, the network element 204 may determine, based on the updated policy information of the first group, a policy for all or some terminals in the first group to access the core network, so that the network element 202 executes the policy, to update a policy at a granularity of a terminal. For a process in which the network element 204 determines the policy for all or some terminals to access the core network, refer to a process in which the network element 204 determines the first policy information in S507. Details are not described again.

It may be understood that actions of the network element 201, the network element 202, the terminal 203, the network element 204, or the serving node 205 in S500 to S515 may be performed, by invoking application program code stored in the memory 403, by the processor 401 in the communication apparatus 40 shown in FIG. 4. This is not limited in this application.

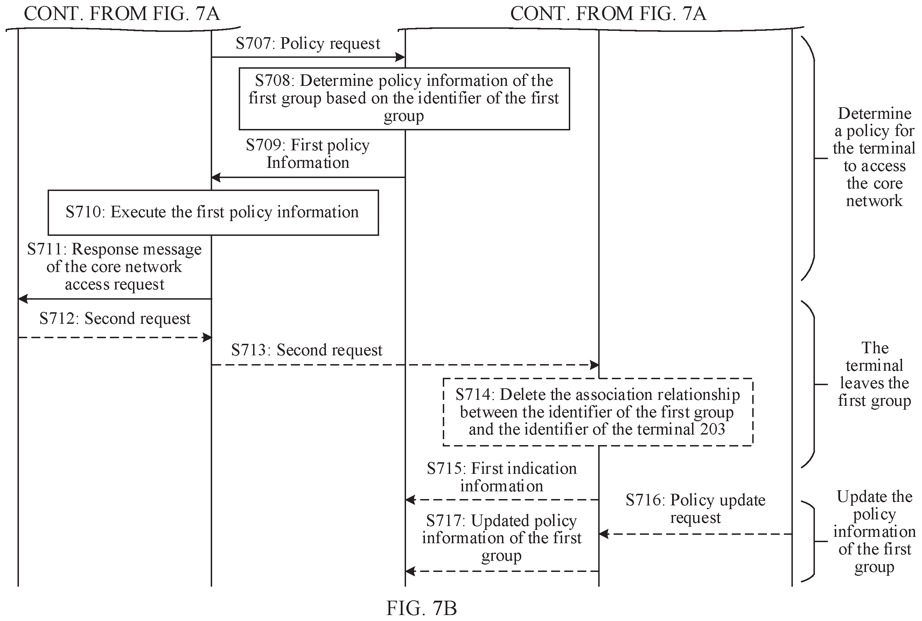

To better understand the communication method provided in this application, the following describes the communication method provided in this application by using an example in which the network element 201 is the GDMF network element in FIG. 3, the network element 202 is the SMF network element in FIG. 3, the terminal 203 is the terminal in FIG. 3, the network element 204 is the PCF network element in FIG. 3, and the serving node 205 is the AF network element in FIG. 3. It may be understood that descriptions of features and steps in the methods shown in FIG. 5 to FIG. 7A and FIG. 7B may be mutually referenced.

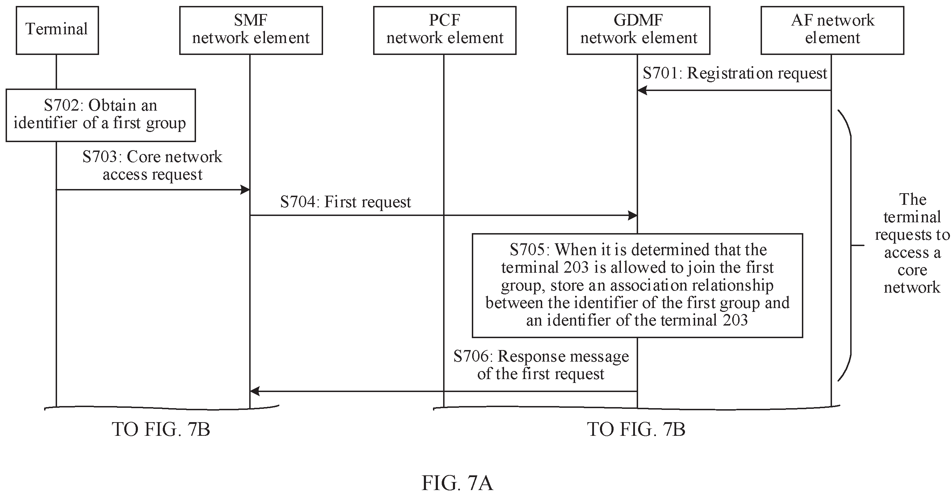

FIG. 7A and FIG. 7B show another communication method according to this application. The communication method may include the following steps.

S701: An AF network element sends a registration request to a GDMF network element. Correspondingly, the GDMF network element receives the registration request from the AF network element.

It may be understood that a process of S701 is similar to a process of S500. For details, refer to corresponding descriptions in S500. Details are not described again.

S702: A terminal obtains an identifier of a first group.

S703: The terminal sends a core network access request to an SMF network element. Correspondingly, the SMF network element receives the core network access request from the terminal.

S704: The SMF network element sends a first request to the GDMF network element. Correspondingly, the GDMF network element receives the first request from the SMF network element.

S705: When it is determined that the terminal is allowed to join the first group, the GDMF network element stores an association relationship between the identifier of the first group and an identifier of the terminal.

S706: The GDMF network element sends a response message of a first request to the SMF network element. Correspondingly, the SMF network element receives the response message of the first request from the GDMF network element.

It may be understood that a process of S702 to S706 is similar to a process of S501 to S504. For details, refer to corresponding descriptions in S501 to S504. Details are not described again.

S707: The SMF network element sends a policy request to a PCF network element. Correspondingly, the PCF network element receives the policy request from the SMF network element.

S708: The PCF network element determines policy information of the first group based on the identifier of the first group.

S709: The PCF network element sends first policy information to the SMF network element. Correspondingly, the SMF network element receives the first policy information from the PCF network element.

S710: The SMF network element executes the first policy information.

It may be understood that a process of S707 to S710 is similar to a process of S505 to S508. For details, refer to corresponding descriptions in S505 to S508. Details are not described again.

S711: The SMF network element sends a response message of the core network access request to the terminal. Correspondingly, the terminal receives, from the SMF network element, the response message of the core network access request.

It may be understood that a process of S711 is similar to a process in which a network element 202 sends a second response message to a terminal 203 in S504. For details, refer to corresponding descriptions in S504. Details are not described again.

Optionally, if the terminal determines to leave the first group, the terminal may request, through the SMF network element, the GDMF network element to remove the terminal from the first group. For example, the method shown in FIG. 7A and FIG. 7B may further include the following optional steps.

S712: The terminal sends a second request to the SMF network element. Correspondingly, the SMF network element receives the second request from the terminal.

S713: The SMF network element sends the second request to the GDMF network element. Correspondingly, the GDMF network element receives the second request from the SMF network element.

S714: The GDMF network element deletes the association relationship between the identifier of the first group and the identifier of the terminal.

S715: The GDMF network element sends first indication information to the PCF network element. Correspondingly, the PCF network element receives the first indication information from the GDMF network element.

It may be understood that a process of S712 to S715 is similar to a process of S509 to S512. For details, refer to corresponding descriptions in S509 to S512. Details are not described again.

Optionally, if the policy information of the first group is updated, the AF network element may trigger an update procedure of a group policy. For example, the method shown in FIG. 7A and FIG. 7B may further include the following optional steps.

S716: The AF network element sends a policy update request to the GDMF network element. Correspondingly, the GDMF network element receives the policy update request from the AF network element.

S717: The GDMF network element sends updated policy information of the first group to the PCF network element. Correspondingly, the PCF network element receives the updated policy information of the first group from the GDMF network element.

It may be understood that a process of S716 and S717 is similar to a process of S513 and S514. For details, refer to corresponding descriptions in S513 and S514. Details are not described again.

It may be understood that actions of the AF network element, the GDMF network element, the SMF network element, the terminal, or the PCF network element in S701 to S717 may be performed, by invoking application program code stored in the memory 403, by the processor 401 in the communication apparatus 40 shown in FIG. 4. This is not limited in this application.

Embodiments mentioned above in this application may be combined when the solutions do not conflict. This is not limited.

The foregoing mainly describes the solutions provided in this application from a perspective of interaction between network elements. Correspondingly, this application further provides a communication apparatus. The communication apparatus may be the network element (for example, the network element 201, the network element 202, or the network element 204) in the foregoing method embodiments, or an apparatus including the foregoing network elements, or a component that can be used in the network element. Alternatively, the communication apparatus may be the terminal 203 in the foregoing method embodiments, or an apparatus including the terminal 203, or a component that can be used in the terminal 203. Alternatively, the communication apparatus may be the serving node 205 in the foregoing method embodiments, or an apparatus including the foregoing serving node 205, or a component that can be used in the serving node 205. It may be understood that, to implement the foregoing functions, the network element, the terminal 203, the serving node 205, or the like includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the network element 201, the network element 202, the terminal 203, the network element 204, or the serving node 205 may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, another division manner may be used.

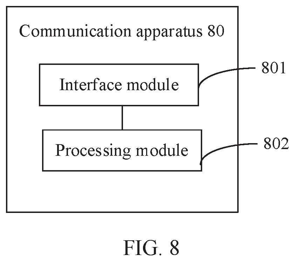

For example, when functional modules are obtained through division in an integrated manner, FIG. 8 is a diagram of a structure of a communication apparatus 80. The communication apparatus 80 includes an interface module 801 and a processing module 802. The interface module 801 may also be referred to as an interface unit, and is configured to perform receiving and sending operations. For example, the interface module may be an interface circuit, a transceiver machine, a transceiver, or a communication interface. The processing module 802 may also be referred to as a processing unit, is configured to perform an operation other than the receiving and sending operations, and for example, may be a processing circuit or a processor.

In some embodiments, the communication apparatus 80 may further include a storage module (not shown in FIG. 8), configured to store program instructions and data.

For example, the communication apparatus 80 is configured to implement a function of a network element 201. For example, the communication apparatus 80 is the network element 201 in the embodiment shown in FIG. 5 or the embodiment shown in FIG. 6, or a GDMF network element in the embodiment shown in FIG. 7A and FIG. 7B.

The interface module 801 is configured to receive a first request. The first request is for requesting to allow a terminal to access a core network, and the first request includes an identifier of a first group. For example, the interface module 801 may be configured to perform S503.

The processing module 802 is configured to: when it is determined that the terminal is allowed to join the first group, store an association relationship between the identifier of the first group and an identifier of the terminal. For example, the processing module 802 may be configured to perform S504.

In a possible implementation, the processing module 802 is specifically configured to send an authentication request to a serving node through the interface module 801, where the authentication request is for requesting to verify whether the terminal is allowed to join the first group, and the serving node is configured to provide a service for a terminal in the first group. The processing module 802 is specifically configured to receive an authentication result from the serving node through the interface module 801, where the authentication result indicates that the terminal is allowed to join the first group.

In a possible implementation, the interface module 801 is further configured to receive a registration request from the serving node, where the registration request includes address information of the serving node. The interface module 801 is specifically configured to send the authentication request to the serving node based on the address information of the serving node.

In a possible implementation, the registration request further includes authentication indication information, and the authentication indication information indicates to authenticate a terminal that requests to join the first group.

In a possible implementation, the interface module 801 is further configured to receive a second request, where the second request is for requesting to remove the terminal from the first group, and the second request includes the identifier of the terminal and the identifier of the first group. The processing module 802 is further configured to delete the association relationship between the identifier of the first group and the identifier of the terminal.

In a possible implementation, the interface module 801 is further configured to send first indication information to a policy function network element, where the first indication information indicates to update a policy for the terminal to access the core network, or indicates that the terminal has been removed from the first group.

In a possible implementation, the interface module 801 is further configured to receive a policy update request from the serving node, where the policy update request is for requesting to update policy information of the first group, the serving node is configured to provide a service for a terminal in the first group, and the policy information of the first group indicates a policy for a terminal in the first group to access the core network. The interface module 801 is further configured to send updated policy information of the first group to the policy function network element.

In a possible implementation, the interface module 801 is further configured to receive a third request from the policy function network element, where the third request is for requesting to obtain the policy information of the first group. The interface module 801 is further configured to send the policy information of the first group to the policy function network element.

In a possible implementation, the interface module 801 is further configured to receive a fourth request, where the fourth request is for requesting to associate the identifier of the terminal with the identifier of the first group.

In a possible implementation, the interface module 801 is further configured to send a response message of the first request, where the response message indicates that the terminal is allowed to join the first group.

In a possible implementation, the response message of the first request includes a temporary identifier of the terminal.

In a possible implementation, the processing module 802 is further configured to allocate the temporary identifier to the terminal; or the interface module 801 is further configured to receive the temporary identifier from the serving node, where the serving node is configured to provide a service for a terminal in the first group.

In a possible implementation, the interface module 801 is further configured to send, to the serving node, the identifier of the first group allocated to the first group, where the serving node is configured to provide a service for a terminal in the first group.

When the communication apparatus is configured to implement the function of the network element 201 or the GDMF network element, for other functions that can be implemented by the communication apparatus 80, refer to related descriptions of the embodiment shown in FIG. 5, the method embodiment shown in FIG. 6, or the embodiment shown in FIG. 7A and FIG. 7B. Details are not described again.

Alternatively, for example, the communication apparatus 80 is configured to implement a function of a network element 204. For example, the communication apparatus 80 is the network element 204 in the embodiment shown in FIG. 6, or a PCF network element in the embodiment shown in FIG. 7A and FIG. 7B.

The interface module 801 is configured to receive a policy request. The policy request is for requesting a policy for a terminal to access the core network, and the policy request includes an identifier of a first group. For example, the interface module 801 may be configured to perform S505.

The processing module 802 is configured to determine policy information of the first group based on the identifier of the first group. The policy information of the first group indicates a policy for a terminal in the first group to access the core network. For example, the processing module 802 may be configured to perform S506.

The interface module 801 is further configured to send first policy information based on the policy information of the first group and information about the terminal. The first policy information indicates the policy for the terminal to access the core network, and the information about the terminal includes subscription information of the terminal or access information of the terminal. For example, the interface module 801 may be further configured to perform S507.

In a possible implementation, the policy request further includes an identifier of the terminal, and the processing module 802 is further configured to determine the information about the terminal based on the identifier of the terminal.

In a possible implementation, the interface module 801 is further configured to send a third request, where the third request is for requesting to obtain the policy information of the first group.

In a possible implementation, the interface module 801 is specifically configured to send the third request when the policy information of the first group is not stored.

In a possible implementation, the interface module 801 is further configured to send a fourth request, where the fourth request is for requesting to associate the identifier of the terminal with the identifier of the first group.

In a possible implementation, the interface module 801 is further configured to receive first indication information, where the first indication information indicates to update the policy for the terminal to access the core network, or indicates that the terminal has been removed from the first group. The interface module 801 is further configured to send second policy information based on the information about the terminal, where the second policy information indicates the policy for the terminal to access the core network.

When the communication apparatus is configured to implement the function of the network element 204 or the PCF network element, for other functions that can be implemented by the communication apparatus 80, refer to related descriptions of the embodiment shown in FIG. 6 or the embodiment shown in FIG. 7A and FIG. 7B. Details are not described again.

Alternatively, for example, the communication apparatus 80 is configured to implement a function of the terminal. The communication apparatus 80 is, for example, a terminal in the embodiment shown in FIG. 5, the embodiment shown in FIG. 6, or the embodiment shown in FIG. 7A and FIG. 7B.

The processing module 802 is configured to obtain an identifier of a first group. For example, the processing module 802 may be configured to perform S501.

The interface module 801 is configured to send a core network access request to a third network element in a core network. The core network access request is for requesting to allow the terminal to access the core network, and the core network access request includes the identifier of the first group. For example, the interface module 801 may be configured to perform S502.

The interface module 801 is further configured to receive a response message from the third network element. The response message indicates whether the terminal is allowed to join the first group.

In a possible implementation, the interface module 801 is further configured to send a second request to the third network element, where the second request is for requesting to remove the terminal from the first group, and the second request includes an identifier of the terminal and the identifier of the first group.

In a possible implementation, the response message includes a temporary identifier of the terminal.

In a possible implementation, the processing module 802 is specifically configured to receive first information from a serving node through the interface module 801, where the first information is for determining the identifier of the first group, and the serving node is configured to provide a service for a terminal in the first group.

When the communication apparatus is configured to implement the function of the terminal, for other functions that can be implemented by the communication apparatus 80, refer to related descriptions of the embodiment shown in FIG. 5, the method embodiment shown in FIG. 6, or the embodiment shown in FIG. 7A and FIG. 7B. Details are not described again.

Alternatively, for example, the communication apparatus 80 is configured to implement a function of a network element 202. For example, the communication apparatus 80 is the network element 202 in the embodiment shown in FIG. 5 or the embodiment shown in FIG. 6, or an SMF network element in the embodiment shown in FIG. 7A and FIG. 7B.

The interface module 801 is configured to send a policy request when it is determined that the core network allows the terminal to join a first group. The policy request is for requesting a policy for the terminal to access the core network, and the policy request includes an identifier of the first group. For example, the interface module 801 may be configured to perform S505.

The interface module 801 is further configured to receive first policy information. The first policy information is determined based on policy information of the first group and information about the terminal, the policy information of the first group indicates a policy for the terminal in the first group to access the core network, and the information about the terminal includes subscription information of the terminal or access information of the terminal. For example, the interface module 801 may be further configured to perform S507.

The processing module 802 is configured to execute the first policy information. For example, the processing module 802 may be configured to perform S508.

In a possible implementation, the interface module 801 is further configured to receive a core network access request from the terminal, where the core network access request is for requesting to allow the terminal to access the core network, and the core network access request includes the identifier of the first group. The interface module 801 is further configured to send a first request to a first network element in the core network based on the core network access request, where the first request is for requesting to allow the terminal to access the core network, and the first request includes the identifier of the first group.

In a possible implementation, the interface module 801 is further configured to receive a response message of the first request from the first network element, where the response message of the first request indicates that the terminal is allowed to join the first group.

In a possible implementation, the response message of the first request includes a temporary identifier of the terminal.

When the communication apparatus is configured to implement the function of the network element 202, for other functions that can be implemented by the communication apparatus 80, refer to related descriptions of the embodiment shown in FIG. 5, the method embodiment shown in FIG. 6, or the embodiment shown in FIG. 7A and FIG. 7B. Details are not described again.

Alternatively, for example, the communication apparatus 80 is configured to implement a function of a serving node 505. For example, the communication apparatus 80 is the serving node 205 in the embodiment shown in FIG. 5 or the embodiment shown in FIG. 6, or an AF network element in the embodiment shown in FIG. 7A and FIG. 7B.

The interface module 801 is configured to receive an authentication request from a first network element in a core network. The authentication request is for requesting to verify whether the terminal is allowed to join the first group, and the authentication request includes an identifier of the first group and the identifier of the terminal.

The processing module 802 is configured to authenticate the terminal based on the authentication request.

The interface module 801 is further configured to send an authentication result. The authentication result indicates whether the terminal is allowed to join the first group.

In a possible implementation, the interface module 801 is further configured to send a registration request to the first network element, where the registration request includes address information of the serving node.

In a possible implementation, the registration request further includes authentication indication information, and the authentication indication information indicates to authenticate a terminal that requests to join the first group.

In a possible implementation, the interface module 801 is further configured to send a policy update request to the first network element, where the policy update request is for requesting to update policy information of the first group, the policy information of the first group indicates a policy for the terminal in the first group to access the core network, and the policy update request includes the identifier of the first group.

In a possible implementation, the interface module 801 is further configured to receive the identifier of the first group allocated by the first network element to the first group.

When the communication apparatus is configured to implement the function of the serving node 205, for other functions that can be implemented by the communication apparatus 80, refer to related descriptions of the embodiment shown in FIG. 5, the method embodiment shown in FIG. 6, or the embodiment shown in FIG. 7A and FIG. 7B. Details are not described again.

In a simple embodiment, a person skilled in the art may figure out that the communication apparatus 80 may be in the form shown in FIG. 4. For example, a processor 401 in FIG. 4 may invoke computer-executable instructions stored in a memory 403, to cause the communication apparatus 80 to perform the methods in the foregoing embodiments.

For example, the functions/implementation processes of the interface module 801 and the processing module 802 in FIG. 8 may be implemented by the processor 401 in FIG. 4 by invoking the computer-executable instructions stored in the memory 403. Alternatively, the function/implementation process of the processing module 802 in FIG. 8 may be implemented by the processor 401 in FIG. 4 by invoking the computer-executable instructions stored in the memory 403, and the function/implementation process of the interface module 801 in FIG. 8 may be implemented through a communication interface 404 in FIG. 4.

It may be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedures. The processor may be built in a SoC (System-on-Chip) or an ASIC, or may be an independent semiconductor chip. In addition to a core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are needed by the communication apparatus. The computer-readable storage medium may be further configured to temporarily store data that is output or is to be output.

Optionally, this application further provides a computer program product. All or some of procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or some of the procedures in the foregoing method embodiments may be completed by the computer instructions instructing related hardware (such as a computer, a processor, a network element 201, a network element 202, a terminal 203, a network element 204, or a serving node 205). The program may be stored in the computer-readable storage medium or the computer program product.

Optionally, this application further provides a communication system, including a network element 201, a network element 202, and a terminal 203 in the foregoing embodiments. Optionally, the communication system further includes at least one of a network element 204 or a serving node 205.

The foregoing descriptions about implementations allow a person skilled in the art to understand that, for the purpose of convenient and brief description, division of the foregoing functional modules is used as an example for description. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a first network element in a core network, wherein the method comprises:
receiving a first request, wherein the first request is for requesting to allow a terminal to access the core network, and the first request comprises an identifier of a first group; and
when it is determined that the terminal is allowed to join the first group, storing an association relationship between the identifier of the first group and an identifier of the terminal.

2. The method according to claim 1, wherein that it is determined that the terminal is allowed to join the first group comprises:
sending an authentication request to a serving node, wherein the authentication request is for requesting to verify whether the terminal is allowed to join the first group, and the serving node is configured to provide a service for a terminal in the first group; and
receiving an authentication result from the serving node, wherein the authentication result indicates that the terminal is allowed to join the first group.

3. The method according to claim 2, wherein before the sending the authentication request to the serving node, the method further comprises:
receiving a registration request from the serving node, wherein the registration request comprises address information of the serving node; and
the sending the authentication request to the serving node comprises:
sending the authentication request to the serving node based on the address information of the serving node.

4. The method according to claim 3, wherein the registration request further comprises authentication indication information, and the authentication indication information indicates to authenticate a terminal that requests to join the first group.

5. The method according to any one of claims 1 to 4, wherein the method further comprises:
receiving a second request, wherein the second request is for requesting to remove the terminal from the first group, and the second request comprises the identifier of the terminal and the identifier of the first group; and
deleting the association relationship between the identifier of the first group and the identifier of the terminal.

6. The method according to claim 5, wherein the method further comprises:
sending first indication information to a policy function network element, wherein the first indication information indicates to update a policy for the terminal to access the core network, or indicates that the terminal has been removed from the first group.

7. The method according to any one of claims 1 to 6, wherein the method further comprises:
receiving a policy update request from the serving node, wherein the policy update request is for requesting to update policy information of the first group, the serving node is configured to provide a service for a terminal in the first group, and the policy information of the first group indicates a policy for a terminal in the first group to access the core network; and
sending updated policy information of the first group to the policy function network element.

8. The method according to any one of claims 1 to 7, wherein the method further comprises:
receiving a third request from the policy function network element, wherein the third request is for requesting to obtain the policy information of the first group; and
sending the policy information of the first group to the policy function network element.

9. The method according to any one of claims 1 to 8, wherein the method further comprises:
receiving a fourth request, wherein the fourth request is for requesting to associate the identifier of the terminal with the identifier of the first group.

10. The method according to any one of claims 1 to 9, wherein the method further comprises:
sending a response message of the first request, wherein the response message indicates that the terminal is allowed to join the first group.

11. The method according to claim 10, wherein the response message of the first request comprises a temporary identifier of the terminal.

12. The method according to claim 11, wherein before the sending the response message of the first request, the method further comprises:
allocating the temporary identifier to the terminal; or
receiving the temporary identifier from the serving node, wherein the serving node is configured to provide a service for a terminal in the first group.

13. The method according to any one of claims 1 to 12, wherein the method further comprises:
sending, to the serving node, the identifier of the first group allocated to the first group, wherein the serving node is configured to provide a service for a terminal in the first group.

14. A communication method, applied to a second network element in a core network, wherein the method comprises:
receiving a policy request, wherein the policy request is for requesting a policy for a terminal to access the core network, and the policy request comprises an identifier of a first group;
determining policy information of the first group based on the identifier of the first group, wherein the policy information of the first group indicates a policy for a terminal in the first group to access the core network; and
sending first policy information based on the policy information of the first group and information about the terminal, wherein the first policy information indicates the policy for the terminal to access the core network, and the information about the terminal comprises subscription information of the terminal or access information of the terminal.

15. The method according to claim 14, wherein the policy request further comprises an identifier of the terminal, and the method further comprises:
determining the information about the terminal based on the identifier of the terminal.

16. The method according to claim 14 or 15, wherein the method further comprises:
sending a third request, wherein the third request is for requesting to obtain the policy information of the first group.

17. The method according to claim 16, wherein the sending the third request comprises:
sending the third request when the policy information of the first group is not stored.

18. The method according to any one of claims 14 to 17, wherein the method further comprises:
sending a fourth request, wherein the fourth request is for requesting to associate the identifier of the terminal with the identifier of the first group.

19. The method according to any one of claims 14 to 18, wherein the method further comprises:
receiving first indication information, wherein the first indication information indicates to update the policy for the terminal to access the core network, or indicates that the terminal has been removed from the first group; and
sending second policy information based on the information about the terminal, wherein the second policy information indicates the policy for the terminal to access the core network.

20. A communication method, wherein the method is applied to a terminal or a chip in the terminal, and the method comprises:
obtaining an identifier of a first group;
sending a core network access request to a third network element in a core network, wherein the core network access request is for requesting to allow the terminal to access the core network, and the core network access request comprises the identifier of the first group; and
receiving a response message from the third network element, wherein the response message indicates whether the terminal is allowed to join the first group.

21. The method according to claim 20, wherein the method further comprises:
sending a second request to the third network element, wherein the second request is for requesting to remove the terminal from the first group, and the second request comprises an identifier of the terminal and the identifier of the first group.

22. The method according to claim 20 or 21, wherein the response message comprises a temporary identifier of the terminal.

23. The method according to any one of claims 20 to 22, wherein the obtaining the identifier of the first group comprises:
receiving first information from a serving node, wherein the first information is for determining the identifier of the first group, and the serving node is configured to provide a service for a terminal in the first group.

24. A communication method, applied to a third network element in a core network, wherein the method comprises:
sending a policy request when it is determined that the core network allows a terminal to join a first group, wherein the policy request is for requesting a policy for the terminal to access the core network, and the policy request comprises an identifier of the first group;
receiving first policy information, wherein the first policy information is determined based on policy information of the first group and information about the terminal, the policy information of the first group indicates a policy for a terminal in the first group to access the core network, and the information about the terminal comprises subscription information of the terminal or access information of the terminal; and
executing the first policy information.

25. The method according to claim 24, wherein the method further comprises:
receiving a core network access request from the terminal, wherein the core network access request is for requesting to allow the terminal to access the core network, and the core network access request comprises the identifier of the first group; and
sending a first request to a first network element in the core network based on the core network access request, wherein the first request is for requesting to allow the terminal to access the core network, and the first request comprises the identifier of the first group.

26. The method according to claim 25, wherein the method further comprises:
receiving a response message of the first request from the first network element, wherein the response message of the first request indicates that the terminal is allowed to join the first group.

27. The method according to claim 26, wherein the response message of the first request comprises a temporary identifier of the terminal.

28. A communication method, wherein the method is applied to a serving node, the serving node is configured to provide a service for a terminal in a first group, and the method comprises:
receiving an authentication request from a first network element in a core network, wherein the authentication request is for requesting to verify whether the terminal is allowed to join the first group, and the authentication request comprises an identifier of the first group and an identifier of the terminal;
authenticating the terminal based on the authentication request; and
sending an authentication result to the first network element, wherein the authentication result indicates whether the terminal is allowed to join the first group.

29. The method according to claim 28, wherein the method further comprises:
sending a registration request to the first network element, wherein the registration request comprises address information of the serving node.

30. The method according to claim 29, wherein the registration request further comprises authentication indication information, and the authentication indication information indicates to authenticate a terminal that requests to join the first group.

31. The method according to any one of claims 28 to 30, wherein the method further comprises:
sending a policy update request to the first network element, wherein the policy update request is for requesting to update policy information of the first group, the policy information of the first group indicates a policy for the terminal in the first group to access the core network, and the policy update request comprises the identifier of the first group.

32. The method according to any one of claims 28 to 31, wherein the method further comprises:
receiving the identifier of the first group allocated by the first network element to the first group.

33. A communication apparatus, comprising a unit or module configured to perform the method according to any one of claims 1 to 13, or comprising a unit or module configured to perform the method according to any one of claims 14 to 19, or comprising a unit or module configured to perform the method according to any one of claims 20 to 23, or comprising a unit or module configured to perform the method according to any one of claims 24 to 27, or comprising a unit or module configured to perform the method according to any one of claims 28 to 32.

34. A communication apparatus, comprising: a processor, wherein the processor is coupled to a memory, the memory is configured to store a program or instructions, and when the program or the instructions are executed by the processor, the apparatus is caused to perform the method according to any one of claims 1 to 13, or perform the method according to any one of claims 14 to 19, or perform the method according to any one of claims 20 to 23, or perform the method according to any one of claims 24 to 27, or perform the method according to any one of claims 28 to 32.

35. A computer-readable storage medium, wherein the computer-readable storage medium stores a computer program or instructions, and when the computer program or the instructions are executed, a computer is caused to perform the method according to any one of claims 1 to 13, or the method according to any one of claims 14 to 19, or the method according to any one of claims 20 to 23, or the method according to any one of claims 24 to 27, or the method according to any one of claims 28 to 32.

36. A computer program product, wherein the computer program product comprises computer program code, and when the computer program code runs on a computer, the computer is caused to implement the method according to any one of claims 1 to 13, or implement the method according to any one of claims 14 to 19, or implement the method according to any one of claims 20 to 23, or implement the method according to any one of claims 24 to 27, or implement the method according to any one of claims 28 to 32.

37. A communication system, comprising an apparatus configured to perform the method according to any one of claims 1 to 13 and an apparatus configured to perform the method according to any one of claims 24 to 27.

38. The communication system according to claim 37, wherein the communication system further comprises at least one of the following: an apparatus configured to perform the method according to any one of claims 14 to 19, or an apparatus configured to perform the method according to any one of claims 28 to 32.

39. A communication method, wherein the method comprises:
receiving, by a third network element in a core network, a core network access request from a terminal, wherein the core network access request is for requesting to allow the terminal to access the core network, and the core network access request comprises an identifier of a first group;
sending, by the third network element, a first request to a first network element in the core network, wherein the first request is for requesting to allow the terminal to access the core network, and the first request comprises the identifier of the first group; and
receiving, by the first network element, the first request, and when it is determined that the terminal is allowed to join the first group, storing an association relationship between the identifier of the first group and an identifier of the terminal.
